# FASCICULE DE BREVET EUROPEEN

(11) **EP 3 423 780 B1**
(45) Date de publication et mention de la délivrance du brevet: **29.09.2021**
(21) Numéro de dépôt: 17720536.6
(22) Date de dépôt: 28.02.2017
(51) Int. Cl.: G01B 5/14, G01B 5/30, G01B 21/32

(54) **CAPTEUR DE DEFORMATION PERMETTANT UNE DISCRIMINATION DE MESURE EN FONCTION DE LA DIRECTION DE LA DEFORMATION**
DEHNUNGSSENSOR MIT MESSUNGSUNTERSCHEIDUNG NACH VERFORMUNGSRICHTUNG
STRAIN SENSOR WITH MEASUREMENT DISCRIMINATION ACCORDING TO THE DEFORMATION DIRECTION

(30) Priorité: 02.03.2016 FR 1600342
(43) Date de publication de la demande: 09.01.2019
(73) Titulaire: État Français représenté par le Délégué Général pour l'Armement, 75509 Paris Cedex 15 (FR); Silmach, 25000 Besançon (FR)
(72) Inventeur: COTE, Thierry, 25660 Gennes (FR); SADOULET, Vianney, 25270 Venise (FR); MINOTTI, Patrice, 25660 Gennes (FR); WALTER, Vincent, 25000 Besançon (FR); GIRARDIN, Pascal, 25660 Montfaucon (FR)
(74) Mandataire: Cabinet Chaillot
(86) Numéro de dépôt international: PCT/FR2017/000036
(87) Numéro de publication internationale: WO 2017/149211

(56) Documents cités:
- EP-A2- 1 998 145
- WO-A1-2013/104738
- FR-A1- 2 974 410

## Description

La présente invention concerne le domaine des microcapteurs et a plus particulièrement pour objet un capteur passif de déformation(s) permettant une discrimination de mesure en fonction de la direction de la déformation.

Par le terme passif, il faut comprendre un capteur fonctionnant sans source d'énergie contrairement aux capteurs, dits actifs, qui utilisent une source d'énergie telle qu'une alimentation électrique ou un système de récupération d'énergie électrique. On connaît de la demande de brevet WO 2013/104738 A1 un capteur passif permettant la discrimination entre une sollicitation du capteur en traction et une sollicitation du capteur en compression.

On connaît de la demande de brevet EP1998145 A1 un microcapteur passif et réversible de comptage du nombre de cycles de sollicitations subis par une structure soumise à une action extérieure répétée, qui peut par exemple correspondre au nombre de cycles de température, de sollicitations mécaniques en traction, compression et/ou flexion engendré, par exemple, par le passage de véhicules sur un pont, générant un niveau de contrainte connu dans la structure. En effet, dans le domaine des infrastructures routières, telle par exemple qu'un pont, il est important de connaître le nombre de véhicules l'ayant franchi afin d'en déterminer l'évolution structurelle.

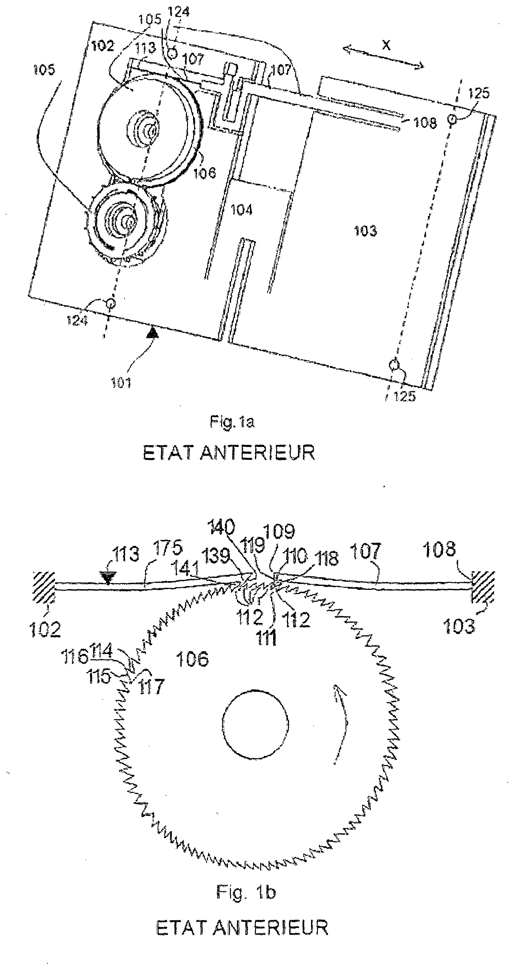

Si l'on se réfère aux Figures la et 1b, sur lesquelles on a représenté un capteur selon EP1998145 A1, on peut voir que ce capteur comprend un système de comptage de cycles de sollicitations comprenant un support 101, principalement en forme de U comportant ainsi une première partie 102 et une deuxième partie 103 reliées par une troisième partie 104 constituant la base du U, et des moyens de comptage 105 disposés sur le support 101 et comportant au moins une première roue dentée 106, dite de comptage, disposée sur ladite première partie 102 du support 101 et, d'une part, une poutre d'entraînement 107 de cette roue de comptage 106 fixée, à l'une, 108, de ses extrémités 108, 109, à ladite deuxième partie 103 et comportant, à son autre extrémité 109, une dent 110, visible sur la Figure 1b, et apte à constituer un engrenage 111, de type cliquet, avec les dents 112 de la roue de comptage 106, et d'autre part, un dispositif anti-retour 113 de la roue de comptage 106, qui est ici une poutre anti-retour 175 dont une extrémité est solidaire de la première partie 102 du support 101 et dont l'autre extrémité porte une dent 139.

La flèche sur la Figure 1b indique le sens normal de rotation de la roue de comptage 106. Comme on peut mieux le voir sur cette Figure 1b, les dents 112 de la roue de comptage 106, la dent 110 de la poutre d'entraînement 107 et la dent 139 de la poutre anti-retour 175 comprennent chacune, selon ladite direction, une surface radiale, respectivement 114, 119 et 141, et une surface inclinée, respectivement 115, 118 et 140, la surface radiale 119 et 141 des dents 110 et 139 se trouvant en face d'une surface radiale 114 d'une dent 112 de la roue de comptage 106. La surface radiale 119 de la dent 110 est orientée pour venir appuyer contre la surface radiale 114 d'une dent 112 lorsque la poutre d'entraînement 107 est déplacée dans ladite direction, à savoir lorsque la deuxième partie 103 est rapprochée de la première partie 102 du support 101. La dent 139 de la poutre anti-retour 175 est orientée de la même manière que la dent 110.

Le rapprochement des première et deuxième parties 102, 103 du support 101 produit donc un entraînement de la roue dentée 106 par la dent 110 de la poutre d'entraînement 107 tandis que l'éloignement de ces deux parties 102, 103 produit un maintien de la première roue dentée 106 par le dispositif anti-retour 113 et un escamotage de la dent 110 de la poutre d'entraînement 107 sur une dent 112 de la première roue dentée 106. A cet effet, la poutre d'entraînement 107 présente une élasticité suffisante pour permettre l'escamotage de la dent 110 sans détérioration. De plus, les poutres d'entraînement 107 et anti-retour 175 présentent une flèche lorsqu'elles sont en place contre la roue 106. Cette déformation initiale permet de garantir le contact et donc l'engrènement malgré les défauts et incertitudes de fabrication/assemblage.

Comme on peut le voir sur la Figure 1a, les première et deuxième parties 102, 103 comportent des première et seconde zones d'ancrage, respectivement 124 et 125, disposées respectivement selon un premier axe et un second axe parallèles entre eux et constituées par des alésages dans chacun desquels peut être insérée une vis en vue de la fixation du capteur sur la structure à surveiller. Les alésages 124, 125 ont un diamètre légèrement supérieur à celui desdits vis. Les faces inférieures, opposées à celles visibles sur la Figure 1a, des parties respectives 102, 103 et 104 du support 101 sont planes et disposées dans un même plan et destinées à être plaquées par lesdites vis contre la structure à surveiller. Dans ce type de capteur, l'axe de la roue de comptage 106 est placé sur ledit axe de la première zone d'ancrage 124 et la poutre d'entraînement 107 est solidaire de la deuxième partie 103.

Lorsque le support 101 est soumis à un cycle de sollicitation en traction selon la direction X (Figure la), par exemple car la structure est elle-même soumise à une sollicitation en traction, les première et deuxième parties 102, 103 du support 101 vont tout d'abord s'éloigner l'une de l'autre lors de l'apparition de la sollicitation, n'entraînant pas une rotation de la roue de comptage 106 qui est maintenue par le dispositif anti-retour 113, puis les parties 102, 103 se rapprocheront du fait de la disparition de la sollicitation, amenant la dent 110 de la poutre d'entraînement 107 à faire tourner la roue de comptage 106. Il en va de même lorsque le support 101 est soumis à un cycle de sollicitation en compression selon la direction X, à la différence que l'entraînement de la roue de comptage 106 se fait à l'apparition de la sollicitation, et non plus lorsqu'elle disparaît.

La solution à la base du système de détection du capteur selon EP1998145 A1 permet donc de compter de manière fiable le nombre de cycles de sollicitations subis par la structure selon une direction X de la structure, peu important la direction des sollicitations le long de la direction X. En d'autres termes, le capteur n'autorise pas une discrimination entre une sollicitation du capteur en traction et une sollicitation du capteur en compression, mais uniquement de compter le nombre de cycles de sollicitations.

On souligne ici que les zones d'ancrage 124, 125 sont disposées de telle sorte que la longueur du support 101 dans la direction X soit la plus grande possible et de telle sorte que la déformation de la structure entre lesdits premier et second axes soit au moins égale au pas P des dents 112 de la roue de comptage 106. En effet, lorsque le capteur est fixé sur une structure soumise à une déformation, la variation de distance entre les deux zones d'ancrage 124 et 125, donc entre les premier et second axes, est proportionnelle à cette longueur L. Par conséquent, pour un pas P donné des dents 112 de la roue de comptage 106, et dans le cas de l'utilisation d'une seule poutre d'entraînement 107, la déformation de la structure entre les premier et second axes doit au moins être égale à P et, de préférence, inférieure ou égale à 1,5P.

En d'autres termes, un cycle de sollicitation de la structure qui conduit à une variation de distance entre les zones d'ancrage 124, 125 inférieure audit pas P ne sera pas compté. De plus, toute variation de distance dépassant la valeur de seuil que constitue ledit pas P sera comptée comme valant pour un cycle, quelle que soit l'amplitude de cette variation de distance.

La solution à la base du système de détection du capteur selon EP1998145 A1 présente donc également l'inconvénient de ne pas permettre de détecter plusieurs seuils d'amplitude de variation de distance des première et secondes zones d'ancrage.

Si l'on se réfère aux Figures 2a à 2d, on peut voir que l'on y a représenté un capteur selon le brevet français FR2974410 B1, qui repose sur le même principe technique que le capteur selon EP1998145 A1, mais qui permet la détection de plusieurs seuils.

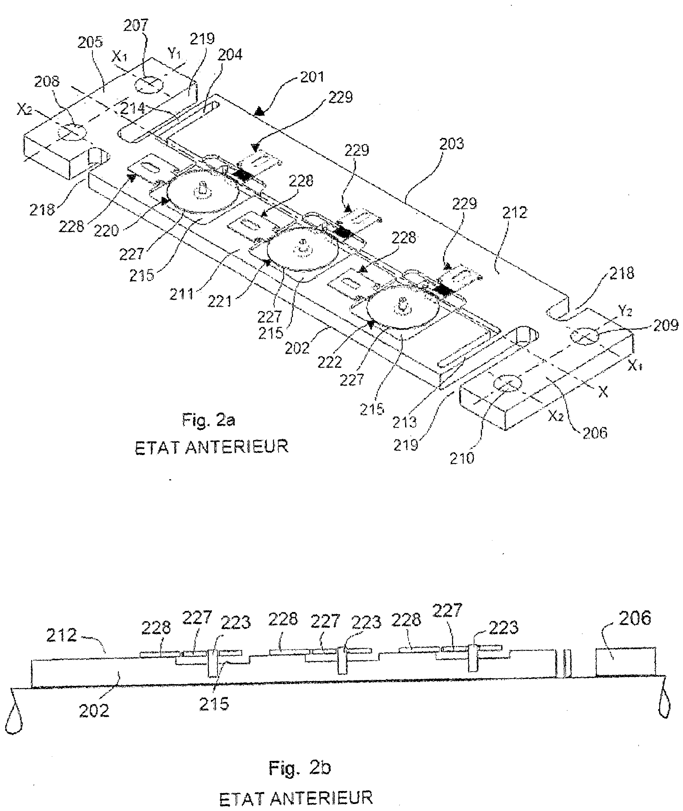

Si l'on se réfère tout d'abord à la Figure 2a, on peut voir que le support 201 comporte ici un premier et un second sous-ensemble 202, 203 en forme de L disposés tête bêche et séparés principalement longitudinalement selon la direction X par un espace 204 et dont les bases respectives 205, 206 sont, en partie, des zones d'ancrage du support 201 sur la structure à surveiller. Ces bases 205, 206 comportent chacune deux alésages 207, 208 et 209, 210. Les axes Y1 et Y2 passant respectivement par les centres des alésages 207, 208 et 209, 210 sont perpendiculaires à la direction X, tandis que les axes X1 et X2 passant respectivement par les centres des alésages 207, 208 et 209, 210 sont parallèles à la direction X. En outre, les première et seconde parties longitudinales 211, 212 sont reliées l'une à l'autre, à leurs extrémités, par un élément élastique, en l'occurrence un cordon de matière 213 et 214.

La seconde partie 211 du premier sous-ensemble 202 comporte trois premiers alésages (non visibles) régulièrement répartis le long de la direction X, ainsi que trois couples de seconds alésages (non visibles), l'axe passant par les centres d'un couple de seconds alésages étant parallèle à l'axe Y1 et chacun des couples est associé à l'un des premiers alésages. Chaque second alésage est destiné à recevoir un axe dépassant du support 201 et apte à permettre un prépositionnement de moyens anti-retour.

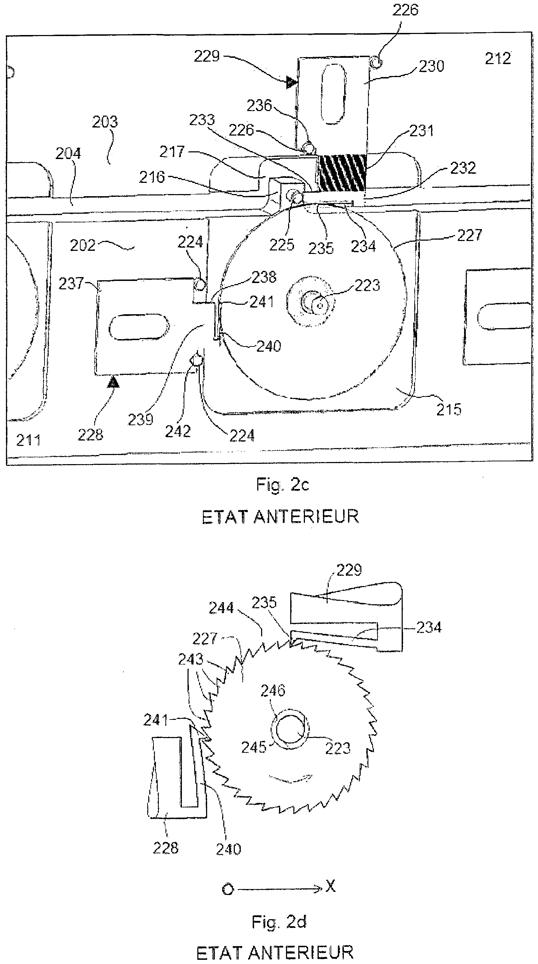

La seconde partie 211 du premier sous-ensemble 202 comporte également autant de dépressions 215 de forme sensiblement carrée que de premiers alésages, chaque dépression 215 étant centrée autour de l'un des premiers alésages. Elle comporte aussi trois créneaux 216, que l'on peut mieux voir sur la Figure 2c, dépassant de la surface latérale de la seconde partie 211 du premier sous-ensemble 202 située en regard de la seconde partie 212 du second sous-ensemble 203. Pour chacun des premiers alésages, l'axe passant par son centre et parallèle à l'axe Y1 est aussi un axe de symétrie de l'un des créneaux 216. Chacun de ces créneaux comporte, dans sa partie médiane, un troisième alésage.

La seconde partie 212 du second sous-ensemble 203 comporte trois couples de quatrièmes alésages (non visibles) répartis de-même que les premiers alésages selon la direction X, chacun desdits couples étant associé à l'un des premiers alésages. Chaque quatrième alésage est destiné à recevoir un axe dépassant du support 201 et apte à permettre un prépositionnement de moyens d'entraînement. De plus, la surface latérale de la seconde partie 212 du second sous-ensemble 203 située en regard de la seconde partie 211 du premier sous-ensemble 202 comporte des encoches 217 (Figure 2c) de dimensions supérieures à celles des créneaux 216 et destinées à permettre l'introduction des créneaux 216 à l'intérieur de celles-ci.

Chacune des bases 205, 206 est partiellement séparée de la seconde partie du L correspondante par deux encoches 218, 219 coaxiales et se faisant face. Les petites encoches 218 ne sont pas indispensables. Les grandes encoches 219 permettent de créer les éléments élastiques, à savoir les cordons de matière 213, 214 de solidarisation des sous-ensembles 202, 203 entre eux.

Sur le support 201 ont été disposés trois systèmes de détection 220, 221, 222 comportant chacun : des axes 223, 224, 225, 226 emmanchés en force dans lesdits premiers, seconds, troisièmes et quatrièmes alésages, et dépassant du support 201 et servant de butée ou d'axe de rotation ; une roue dentée 227 ; des moyens anti-retour 228 ; et un dispositif d'actionnement 229.

Si l'on se réfère en particulier à la Figure 2c, on peut voir que chaque dispositif d'actionnement 229 comprend une plaque en forme de chiffre 9 comprenant :
- une première partie 230 en O, rigide et fixée à la seconde partie 212 du second sous-ènsemble 203, l'ouverture centrale de cette première partie 230 étant constituée par une boutonnière ;
- une deuxième partie 231 élastique dont une extrémité est solidaire de la première partie 230 et dont l'autre extrémité est solidaire d'une troisième partie 232 ; et
- la troisième partie 232, comportant une poutre principale 233 en forme de L dont l'une des faces latérales est fixée à ladite seconde partie 232 tandis que la base est solidaire d'une poutre secondaire 234 sensiblement de même longueur et disposée parallèlement à la poutre principale 233 mais plus fine et comportant, comme montré de manière schématique sur la Figure 2d, une dent 235 à son extrémité.

Les moyens anti-retour 228 se présentent également sous la forme d'une plaque et comportent :
- une première partie 237 en O, rigide et fixée à la seconde partie 211 du premier sous-ensemble 202 du support 201, l'ouverture centrale de cette première partie 237 étant constituée par une boutonnière ; et
- une seconde partie 238 de dimensions plus petites que celles de la première partie 237 et comportant une poutre principale 239 en forme de L dont l'une des faces latérale est fixée à ladite première partie 237 tandis que la base est solidaire d'une poutre secondaire 240 sensiblement de même longueur et disposée parallèlement à la poutre principale 239 mais plus fine et comportant, comme représenté schématiquement sur la Figure 2d, une dent 241 à son extrémité.

Par ailleurs, la face latérale de la première partie 230, 237, respectivement du dispositif d'actionnement 229 et des moyens anti-retour 228, dont une partie est solidaire de la seconde partie respectivement 231 et 238, comporte une encoche 236, 242 sensiblement de même dimension que les axes respectivement 226 et 224, et la forme de cette première partie 230, 237 ainsi que le positionnement des axes 224, 226 sur le support 201 permettent de prépositionner parfaitement le dispositif d'actionnement 229 et les moyens anti-retour 228 avant de les fixer, par exemple par collage ou vissage, sur le support 201.

Si l'on se réfère à la Figure 2d, on peut constater que le principe de comptage du capteur selon FR2974410 est effectivement identique à celui du capteur selon EP1998145, et ainsi que la roue dentée 227 comporte des dents 243 sur sa surface périphérique externe 244 et une surface périphérique interne 245, de préférence rugueuse destinée à coopérer avec un manchon 246 solidaire de l'axe 223 pour former un couple résistant et empêcher une autorotation de la roue dentée 227. La poutre secondaire, ou d'entraînement, 234 du dispositif d'actionnement 229 comporte la dent 235 à son extrémité libre, cette dent 235 étant apte à former un engrenage, de type cliquet, avec celles 243 de ladite roue 227.

Sur la Figure 2d, la direction OX indique la direction des déformations aptes à être détectées par le capteur tandis que la flèche indique le sens normal de rotation de la roue de comptage 227. Les dents 243 de la roue 227, la dent 235 de la poutre d'entraînement 234 et la dent 241 de la poutre secondaire 240 ont la même configuration que celle de la Figure 1b, et les dents 235 et 241 sont donc aptes à former un engrenage, de type cliquet, avec les dents 243 de la roue de comptage 227.

On peut souligner ici que la fonction de l'axe 225 inséré dans l'alésage du créneau 216 est de limiter, dans la direction OX, la course de la poutre principale 233 à une valeur environ égale à 1,5 fois le pas P des dents 243 de la roue dentée 227 associée. Comme la poutre d'entrainement 234 est solidaire et parallèle à la poutre principale 233, son déplacement selon la direction OX sera aussi limité à 1,5 fois ledit pas P. Par conséquent, avec cet axe 225 constitutif d'un dispositif de limitation ou de butée, tout déplacement selon la direction OX supérieure audit pas P ne provoquera la rotation de la roue dentée 227 que d'un angle correspondant à une seule dent 243.

Afin de permettre la détection de plusieurs seuils de déformations différents, les différentes roues dentées 227 présentent un pas de dents différent d'une roue à l'autre. De cette manière, une déformation Δx subie par la structure sera détectée ou non en fonction de sa valeur et de la valeur des pas P1, P2 et P3 des trois roues 227 :
- si Δx < P1, alors qu'aucune détection par les roues 227,
- si P1 < Δx < P2, alors comptage uniquement par la roue 227 de pas P1,
- si P2 < Δx < P3, alors comptage par les roues 227 de pas P1 et P2, et
- si Δx > P3, alors comptage par les trois roues 227.

Le capteur selon FR2974410 B1 permet donc de résoudre le problème de la détection de différents seuils de déformations. Toutefois, comme pour le capteur selon EP1998145 A1, aucune discrimination entre une sollicitation du capteur en traction et une sollicitation du capteur en compression n'est possible.

Un objectif de la présente invention est donc de proposer un capteur passif permettant une discrimination de mesure en fonction du type de déformation, à savoir un allongement (sollicitation en traction) ou un raccourcissement (sollicitation en compression) du capteur.

La présente invention a pour objet un capteur passif de déformation(s) subie(s) par une structure selon une direction dite de mesure, le capteur comprenant un système de détection d'une variation de distance entre deux points ou zones d'une structure, et un support possédant une première partie et une seconde partie configurées pour être fixées respectivement à l'un et à l'autre desdits deux points ou zones de la structure, de sorte que lorsque l'une des première et seconde parties se déplace dans un sens le long de la direction de mesure, l'autre des première et seconde parties se déplace dans le sens opposé, le système de détection comprenant :
- un ensemble de mesure de déformation porté par la première partie du support et actionnable uniquement dans un sens, dit de mesure, de la direction de mesure pour mesurer et mémoriser l'une parmi l'amplitude d'une déformation et le nombre de cycles de déformations,
- un dispositif d'actionnement comprenant un élément d'actionnement qui est déplaçable suivant la direction de mesure et est configuré pour actionner l'ensemble de mesure de déformation lorsque l'élément d'actionnement est déplacé dans la direction de mesure, par suite d'un déplacement relatif des première et seconde parties du support,
caractérisé par le fait que le dispositif d'actionnement comprend :
- un ensemble intermédiaire comprenant :
   - une partie de fixation par laquelle l'ensemble intermédiaire est porté par l'une des première et seconde parties du support,
   - l'élément d'actionnement, et
   - une liaison élastique entre la partie de fixation et l'élément d'actionnement, et
- un ensemble d'actionnement solidaire de celle des première et seconde parties du support qui ne porte pas l'ensemble intermédiaire, et possédant une partie dite de poussée qui est dirigée dans le sens de mesure, l'ensemble d'actionnement étant configuré de telle sorte que :
- lorsque l'ensemble intermédiaire est porté par la première partie du support, la partie de poussée est en regard de l'ensemble intermédiaire de façon à exercer sur ce dernier une poussée dans le sens de mesure lors d'un déplacement de la seconde partie du support dans le sens de mesure, déplaçant ainsi l'élément d'actionnement dans le sens de mesure pour actionner l'ensemble de mesure de déformation, mais à n'exercer aucune action sur l'ensemble intermédiaire lors d'un déplacement de la seconde partie du support dans un second sens qui est opposé au sens de mesure ; et
- lorsque l'ensemble intermédiaire est porté par la seconde partie du support, la partie de poussée est en regard de l'ensemble intermédiaire de façon à n'exercer aucune action sur ce dernier lors d'un déplacement de la seconde partie du support dans le sens de-mesure, l'élément d'actionnement étant ainsi déplacé conjointement avec la seconde partie du support dans le sens de mesure pour actionner l'ensemble de mesure de déformation, mais à exercer une poussée sur l'ensemble intermédiaire lors d'un déplacement de la seconde partie du support dans le sens opposé au sens de mesure, afin d'empêcher tout déplacement relatif entre l'élément d'actionnement et l'ensemble de mesure de déformation,
ce par quoi l'ensemble de mesure de déformation ne sera actionné que lors d'un déplacement de la seconde partie du support dans le sens de mesure, permettant ainsi une discrimination de mesure entre une sollicitation du capteur en traction et une sollicitation du capteur en compression.

En d'autres termes, l'ensemble d'actionnement est configuré pour coopérer, par la partie de poussée, avec l'ensemble intermédiaire de façon à autoriser l'élément d'actionnement à se déplacer dans le sens de mesure par rapport à l'ensemble de mesure de déformation lors d'un déplacement de la seconde partie du support dans le sens de mesure, et ainsi à actionner l'ensemble de mesure de déformation, mais à ne pas autoriser l'élément d'actionnement à se déplacer par rapport à l'ensemble de mesure de déformation lors d'un déplacement de la seconde partie du support dans un second sens qui est opposé au sens de mesure.

Par le terme « solidaire », il faut comprendre que l'ensemble d'actionnement se déplace d'un seul tenant avec la partie du support à laquelle il est relié.

Le sens de déplacement d'une partie du support est défini par convention dans la présente demande par rapport à un repère fixe centré sur le centre du capteur passif, dans son état non déformé.

Selon un premier mode de réalisation particulier de la présente invention, l'ensemble intermédiaire est porté par la première partie du support et l'ensemble d'actionnement est solidaire de la seconde partie du support, et l'ensemble de mesure de déformation comprend au moins une dent fixe et l'élément d'actionnement comprend au moins une dent, dite mobile, la ou chaque dent fixe offrant une face de retenue dirigée dans le sens de mesure et configurée pour autoriser un déplacement de la ou des dents mobiles au-delà de ladite dent fixe par suite d'un déplacement de la seconde partie du support dans le sens de mesure, mais retenir la ou l'une des dents mobiles lorsque l'élément d'actionnement se déplace dans le second sens sous l'action de la liaison élastique, après s'être déplacée au-delà de ladite dent fixe.

Le capteur selon le premier mode de réalisation permet de déterminer si la structure à surveiller a été soumise à une sollicitation dépassant un seuil préalablement défini dans le sens de mesure, correspondant soit à une sollicitation en traction, soit une sollicitation en compression. Un tel capteur pourra être appliqué, par exemple, sur une pièce sensible d'un mécanisme, comme par exemple sur un train d'atterrissage, de façon à savoir, en cas d'accident, si la pièce a été soumise à une sollicitation non admissible.

L'élément d'actionnement et/ou l'ensemble de mesure peuvent ainsi comprendre plusieurs dents, à pas constant ou non.

Selon une variante du premier mode de réalisation particulier, l'ensemble de mesure de déformation comprend plusieurs dents fixes, espacées les unes des autres dans le sens de mesure et dans une direction orthogonale au sens de mesure, de préférence situées dans un même plan, et l'élément d'actionnement comprend plusieurs dents mobiles également espacées les unes des autres de telle sorte que chaque dent mobile se situe sur l'axe d'une dent fixe correspondante, les dents mobiles et/ou les dents fixes étant espacées les unes des autres d'un pas inférieur à la longueur des dents mobiles et/ou fixes.

L'élément d'actionnement peut être formé par au moins une poutre dite d'actionnement, l'au moins une poutre d'actionnement comportant une ou plusieurs dents mobiles, et la liaison élastique peut comprendre au moins deux poutres de liaison parallèles ayant chacune une première extrémité solidaire de la partie de fixation et une seconde extrémité solidaire de l'au moins une poutre d'actionnement, les au moins deux poutres de liaison formant un parallélogramme déformable.

Selon un deuxième mode de réalisation particulier de la présente invention, l'ensemble de mesure de déformation est une roue dentée montée rotative sur la première partie du support et l'élément d'actionnement est formé par une poutre, dite d'actionnement, comportant dans une région d'extrémité au moins une dent s'étendant entre deux dents de la roue dentée de façon à constituer un engrenage avec les dents de la roue dentée.

Le capteur selon le deuxième mode de réalisation est un capteur réversible permettant de compter le nombre de cycles de sollicitations (ou variations de distance entre lesdits deux points ou zones de la structure) uniquement dans le sens de mesure, et non dans le sens opposé. Par réversible, il faut entendre un capteur apte à détecter un cycle de sollicitation sans se détériorer, donc apte ensuite à détecter un autre cycle.

On prévoira avantageusement des moyens anti-retour configurés pour empêcher une rotation de la roue dentée dans le sens de rotation contraire à celui correspondant au sens de mesure. De tels moyens anti-retour pourront être similaires à ceux selon FR2974410 B1 et EP1998145 A1 (poutre avec dent ou freinage sur axe de la roue par exemple).

L'ensemble intermédiaire et l'ensemble d'actionnement peuvent être portés par la première et la seconde partie du support, respectivement, et l'ensemble d'actionnement peut s'étendre en porte-à-faux au-dessus de la première partie du support, la région d'extrémité de l'ensemble d'actionnement qui se situe en porte-à-faux présentant la partie de poussée, la partie de poussée étant en contact ou à distance de l'ensemble intermédiaire.

Selon une première variante du deuxième mode de réalisation, l'ensemble intermédiaire et l'ensemble d'actionnement sont portés par la première et la seconde partie du support, respectivement, et l'ensemble intermédiaire comprend, s'étendant à partir de l'extrémité de la liaison élastique opposée à la partie de fixation de l'ensemble intermédiaire, une partie d'appui qui est en porte-à-faux au-dessus de la seconde partie du support et contre laquelle la partie de poussée exercera une poussée en cas de déplacement de la seconde partie du support dans le sens de mesure.

Selon une deuxième variante du deuxième mode de réalisation, l'ensemble intermédiaire et l'ensemble d'actionnement sont portés par la seconde et la première partie du support, respectivement, et l'ensemble intermédiaire comprend, s'étendant à partir de l'extrémité de la liaison élastique opposée à la partie de fixation de l'ensemble intermédiaire, une partie d'appui qui est en porte-à-faux au-dessus de la première partie du support et contre laquelle la partie de poussée exercera une poussée en cas de déplacement de la seconde partie du support dans le sens opposé au sens de mesure, la partie de poussée étant, de préférence, positionnée de façon à maintenir la poutre d'actionnement, à l'encontre de l'action de rappel de la liaison élastique, dans une position décalée, dans le sens de mesure, de celle que la poutre d'actionnement occuperait en l'absence de la partie de poussée.

Dans les première et deuxième variantes du deuxième mode de réalisation, l'ensemble d'actionnement peut comprendre avantageusement une partie en forme de disque dont le bord extérieur constitue la partie de poussée, la partie en forme de disque étant montée à rotation autour d'un axe de rotation excentré vis-à-vis du centre de la partie en forme de disque, de telle sorte qu'une rotation de la partie en forme de disque permet de faire varier soit la distance entre la partie de poussée et la partie d'appui de l'ensemble intermédiaire, soit la distance entre la position décalée dans laquelle la poutre d'actionnement est maintenue et celle qu'elle occuperait en l'absence de l'ensemble d'actionnement.

Selon une troisième variante du deuxième mode de réalisation, l'ensemble intermédiaire et l'ensemble d'actionnement sont portés par la première et la seconde partie du support, respectivement, et l'élément d'actionnement est formé par une pièce intermédiaire comportant, d'une part, au moins une dent s'étendant entre deux dents de la roue dentée de façon à constituer un engrenage avec les dents de la roue dentée et, d'autre part, un évidement dans lequel s'étend la partie de poussée de l'ensemble d'actionnement, l'évidement présentant une face d'appui qui est opposée à la partie de poussée, et de préférence également à distance de la partie de poussée. La pièce intermédiaire pourra être une pièce en forme de L, dont la base présente une face formant ladite face d'appui, et dont la portion longitudinale est reliée, par son extrémité, à la liaison élastique, laquelle pourra par exemple être formée par un ressort de traction solidaire de la pièce intermédiaire à une première extrémité et solidaire de la première partie du support à une seconde extrémité, l'axe du ressort de traction étant parallèle à la direction de mesure.

En variante, et ce pour le deuxième mode de réalisation et ses variantes, la liaison élastique de l'ensemble intermédiaire peut comprendre au moins deux poutres de liaison parallèles, orthogonales à la direction de mesure et ayant chacune une première extrémité solidaire de la partie de fixation et une seconde extrémité solidaire de la poutre d'actionnement, les au moins deux poutres de liaison formant un parallélogramme déformable.

Selon un troisième mode de réalisation de la présente invention, le capteur comprend un second ensemble de mesure de déformation porté par la première partie du support et actionnable uniquement dans un second sens de mesure, opposé au premier sens de mesure, pour mesurer et mémoriser l'une parmi l'amplitude d'une déformation et le nombre de cycles de déformations, et par le fait que le dispositif d'actionnement comprend :
- un second ensemble intermédiaire comprenant :
   - une seconde partie de fixation par laquelle le second ensemble intermédiaire est porté par l'une des première et seconde parties du support,
   - un second élément d'actionnement déplaçable suivant la direction de mesure et configuré pour actionner le second ensemble de mesure de déformation lorsque le second élément d'actionnement est déplacé dans le second sens de mesure, et
   - une seconde liaison élastique entre la seconde partie de fixation et le second élément d'actionnement, et
- un second ensemble d'actionnement solidaire de celle des première et seconde parties du support qui ne porte pas le second ensemble intermédiaire, et possédant une seconde partie de poussée qui est dirigée dans le second sens de mesure, le second ensemble d'actionnement étant configuré de telle sorte que :
   - lorsque le second ensemble intermédiaire est porté par la première partie du support, la seconde partie de poussée est en regard du second ensemble intermédiaire de façon à exercer sur ce dernier une poussée dans le second de mesure lors d'un déplacement de la seconde partie du support dans le second sens de mesure, déplaçant ainsi le second élément d'actionnement dans le second sens de mesure pour actionner le second ensemble de mesure de déformation, mais à n'exercer aucune action sur le second ensemble intermédiaire lors d'un déplacement de la seconde partie du support dans le premier sens de mesure ; et
   - lorsque le second ensemble intermédiaire est porté par la seconde partie du support, la seconde partie de poussée est en regard du second ensemble intermédiaire de façon à n'exercer aucune action sur le second ensemble intermédiaire lors d'un déplacement de la seconde partie du support dans le second sens de mesure, le second élément d'actionnement étant ainsi déplacé conjointement avec la seconde partie du support dans le second sens de mesure pour actionner le second ensemble de mesure de déformation, mais à exercer une poussée sur le second ensemble intermédiaire lors d'un déplacement de la seconde partie du support dans le premier sens de mesure, afin d'empêcher tout déplacement relatif entre le second élément d'actionnement et le second ensemble de mesure de déformation,
ce par quoi le second ensemble de mesure de déformation ne sera actionné que lors d'un déplacement de la seconde partie du support dans le second sens de mesure, permettant ainsi au capteur de mesurer une déformation due à une sollicitation du capteur en traction ou une déformation due à une sollicitation du capteur en compression, tout en les discriminant l'une de l'autre.

Le capteur selon le troisième mode de réalisation permet donc de réaliser une mesure associée à une sollicitation dans un premier sens de mesure et à une sollicitation dans un second sens de mesure opposé, tout en permettant une discrimination des mesures en fonction du sens de mesure. Un tel capteur est particulièrement avantageux dans les cas où il n'est pas possible de disposer plusieurs capteurs sur une zone spécifique de la structure à surveiller, par exemple car elle est de petite dimension.

Les ensembles d'actionnement et les ensembles intermédiaires des capteurs selon la présente invention pourront par exemple être réalisés en silicium, en métal ou en matière plastique.

Pour mieux illustrer l'objet de la présente invention, on va en décrire ci-après, à titre indicatif et non limitatif, des modes de réalisation particuliers avec référence au dessin annexé.

Sur ce dessin :
- la Figure la est une vue en perspective d'un capteur passif et réversible de comptage du nombre de cycles de sollicitations subis par une structure, conformément à un premier état antérieur de la technique ;
- la Figure 1b est une vue schématique de la roue dentée de comptage, de la poutre d'actionnement et de la poutre anti-retour du capteur de la Figure la ;
- la Figure 2a est une vue en perspective d'un capteur passif et réversible de comptage de nombre de cycles de sollicitations avec discrimination d'au moins deux seuils différents de cycles de sollicitations, conformément à un second état antérieur de la technique ;
- la Figure 2b est une vue en coupe longitudinale de la Figure 2a, ce capteur étant fixé sur une structure à surveiller ;
- la Figure 2c est une vue agrandie de l'un des systèmes de détection et de comptage du capteur de la Figure 2a ;
- la Figure 2d est un schéma détaillé partiel du dispositif de détection et de comptage de la Figure 2c ;
- les Figures 3a, 3b, 3c et 3d sont des vues schématiques de dessus d'un capteur selon un premier mode de réalisation de la présente invention, pour détection d'un seuil d'amplitude de déformation en traction, respectivement à l'état initial, audit seuil d'amplitude, après retour à l'état initial, et en cas de sollicitation en compression ;
- la Figure 4 est une vue analogue à la Figure 3a, montrant un capteur selon le premier mode de réalisation, pour détection en compression ;
- les Figures 5a et 5b sont des vues analogues aux Figures 3a et 3b, montrant un capteur selon une première variante du premier mode de réalisation, ayant trois seuils de détection, respectivement à l'état initial et à un seuil de détection ;
- les Figures 6a et 6b sont des vues analogues aux Figures 5a et 5b, montrant un capteur selon une deuxième variante ;
- les Figures 7a et 7b sont des vues analogues aux Figures 5a et 5b, montrant un capteur selon une troisième variante permettant de discrétiser le comptage de plusieurs amplitudes dont les écarts de valeur sont inférieurs au pas d'une denture ;
- les Figures 8a, 8b et 8c sont des vues schématiques de dessus d'un capteur selon un deuxième mode de réalisation de la présente invention, pour comptage de cycles de sollicitations en traction, respectivement à l'état initial, au milieu d'un cycle de sollicitation en traction, et en cas de sollicitation en compression ;
- la Figure 9 est une vue analogue à la Figure 8a, montrant un capteur selon le deuxième mode de réalisation, pour comptage de cycles de sollicitations en compression ;
- les Figures 10a et 10b sont des vues de détail analogues aux Figures 8a et 8b, montrant une partie d'un capteur selon une première variante du deuxième mode de réalisation, toujours pour comptage de cycles de sollicitations en traction ;
- les Figures 11a et 11b sont des vues analogues aux Figures 10a et 10b, montrant une partie d'un capteur selon la première variante, mais pour comptage de cycles de sollicitations en compression ;
- les Figures 12a, 12b et 12c sont des vues analogues aux Figures 8a, 8b et 8c, montrant un capteur selon une deuxième variante du deuxième mode de réalisation ;
- les Figures 13a, 13b et 13c sont des vues analogues aux Figures 8a, 8b et 8c, montrant un capteur selon une troisième variante du deuxième mode de réalisation ;
- la Figure 14 est une vue schématique de dessus d'un capteur selon un troisième mode de réalisation, à l'état initial ; et
- les Figures 15 et 16 sont des vues analogues à la Figure 14, montrant un capteur respectivement selon une première et une seconde variante du troisième mode de réalisation.

Les capteurs selon les premier, deuxième et troisième modes de réalisation décrits ci-dessous, ainsi que leurs variantes, comprennent tous un support analogue au support 201 du brevet français FR2974410 B1 décrit ci-dessus, à savoir un support 1 ayant une première partie la et une seconde partie 1b correspondant respectivement aux premier et second sous-ensembles 202, 203 du support 201, espacées par un espace 1c, et présentant deux zones d'ancrage 1d, le constituées chacune par deux couples d'alésages 1d, le.

Sur les Figures, la direction de mesure est parallèle à la direction longitudinale du support 1. Lorsque le capteur est sollicité en traction, le support 1 s'allonge, et ainsi les zones d'ancrage 1d, le s'éloignent l'une de l'autre, la première partie la se déplace vers la gauche tandis que la seconde partie 1b se déplace vers la droite lorsque l'on observe les Figures, et le sens de mesure est dirigé vers la droite. En revanche, lorsque le capteur est sollicité en compression, le support 1 se raccourcit, et ainsi les zones d'ancrage 1d, le se rapprochent, la première partie la se déplace vers la droite tandis que la seconde partie 1b se déplace vers la gauche, et le sens de mesure est dirigé vers la gauche.

On souligne ici que les première et seconde parties 1a, 1b sont rigides et ne se déforment pas ou très peu. On peut donc effectivement observer un déplacement des première et seconde parties 1a, 1b dans la direction de mesure.

On souligne également que les vues sont schématiques et que les systèmes de détection ont été agrandis de manière exagérée afin de permettre une meilleure visualisation de leurs comportements en cas de sollicitations. Le déplacement des première et seconde parties 1a, 1b du support 1 n'a pas été représenté sur les Figures. Bien entendu, les déformations destinées à être mesurées par les capteurs selon la présente invention sont de l'ordre de quelques centaines de nanomètres à plusieurs dizaines de micromètres. Des modes de réalisation à une autre échelle pourraient servir à détecter, compter et mémoriser des déformations de plusieurs millimètres à plusieurs centimètres.

### Premier mode de réalisation : détection d'un seuil d'amplitude de déformation en traction

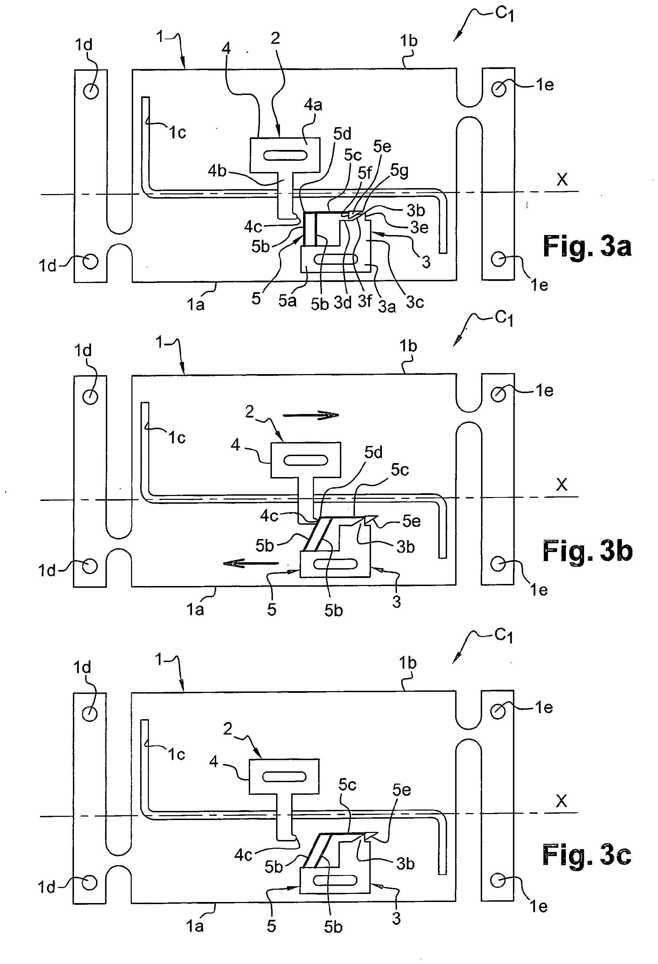

Si l'on se réfère tout d'abord à la Figure 3a, sur laquelle on a représenté une vue schématique de dessus d'un capteur C₁ selon un premier mode de réalisation de la présente invention, pour détection d'un seuil d'amplitude de déformation en traction, on peut voir que le capteur C₁ comprend un dispositif d'actionnement 2 et un ensemble de mesure 3.

Le dispositif d'actionnement 2 comprend un ensemble d'actionnement 4 et un ensemble intermédiaire 5.

L'ensemble d'actionnement 4 est formé par une plaque rigide comprenant une première partie 4a en O, fixée à la portion longitudinale de la seconde partie 1b du support 1, et une poutre 4b s'étendant à partir du bord latéral de la première partie 4a qui est situé le plus proche de l'espace 1c, et perpendiculairement audit bord, et donc perpendiculairement à la direction X. La longueur de la poutre 4b est telle que la région d'extrémité libre de la poutre 4b est en porte-à-faux vis-à-vis de la portion longitudinale de la seconde partie 1b, en d'autres termes elle se situe au-dessus de la portion longitudinale de la première partie la. La région d'extrémité libre de la poutre 4b présente, sur un bord longitudinal de la poutre 4b, une saillie arrondie formant une partie de poussée 4c. L'ensemble d'actionnement 4 est solidaire de la seconde partie 1b et se déplace donc d'un seul tenant avec cette dernière.

L'ensemble intermédiaire 5 comprend une partie de fixation 5a, deux poutres de liaison 5b et une poutre d'actionnement 5c. La partie de fixation 5a est une plaque rigide en O fixée à la portion longitudinale de la première partie la du support 1. Les deux poutres de liaison 5b s'étendent toutes deux perpendiculairement à un bord de la partie de fixation 5a qui est parallèle à la direction X. Elles sont donc parallèles entre elles et perpendiculaires à la direction X. Les extrémités libres des poutres de liaison 5b sont solidaires de la poutre d'actionnement 5c, au niveau d'une région d'une première extrémité 5d de la poutre d'actionnement 5c, cette dernière portant, à son extrémité, une dent 5e, dite mobile. La poutre d'actionnement 5c est globalement parallèle à la direction X.

Les deux poutres de liaison 5b forment ensemble un parallélogramme déformable. Autrement dit, la poutre d'actionnement 5c est reliée à la partie de fixation 5a par une liaison permettant de déplacer de manière élastique la poutre d'actionnement 5c selon la direction X, tout en conservant la poutre d'actionnement 5c globalement parallèle à la direction X.

L'ensemble de mesure 3 comprend une partie de fixation 3a et une dent 3b, dite fixe. Dans l'exemple représenté sur les Figures 3a à 3d, une même plaque rigide en O forme la partie de fixation 5a de l'ensemble intermédiaire 5 et la partie de fixation 3a de l'ensemble de mesure 3. Toutefois, la partie de fixation 3a comprend en outre une portion rectangulaire 3c s'étendant perpendiculairement au bord de la partie de fixation 5a à partir duquel s'étendent les poutres de liaison 5b, et la dent 3b est solidaire du bord libre 3d de la portion 3c qui se situe le plus proche de l'espace 1c.

Une dépression sera prévue dans la portion longitudinale de la première partie la du support 1, laquelle dépression pourra s'étendre sous les poutres de liaison 5b jusqu'à en partie sous ladite portion 3c et sous la dent fixe 3b, de telle sorte que la plaque formant la partie de fixation 5a et la partie de fixation 3a est fixée au support 1 également partiellement au niveau de la portion 3c.

On peut indiquer ici que les ouvertures centrales des premières parties 4a et 3a/5a sont constituées par une boutonnière et que les premières parties 4a et 3a/5a sont fixées au support 1 par tout moyen approprié, tel que par collage ou vissage. On pourra également prévoir un prépositionnement par des encoches et axes, comme pour le capteur selon FR2974410 B1. Cela sera applicable pour tous les modes de réalisation décrits ci-après.

Chacune de la dent fixe 3b et de la dent mobile 5e présente une première surface respectivement 3e, 5f, dite de retenue, qui est perpendiculaire à la direction X ou inclinée par rapport à la direction X de façon à former un cran d'arrêt, et une seconde surface inclinée respectivement 3f, 5g, reliant le sommet de la dent 3b, 5e au bord de la portion 3c ou à l'extrémité libre de la poutre d'actionnement 5c, respectivement.

L'ensemble d'actionnement 4 et l'ensemble intermédiaire 5 sont positionnés sur le support 1 de telle sorte que la partie de poussée 4c est, à l'état initial du capteur, à savoir en l'absence de sollicitation, en contact ou à distance de la première extrémité 5d de la poutre d'actionnement 5c, et se situe entre la poutre d'actionnement 5c et la zone d'ancrage 1d de la première partie la du support 1.

L'ensemble d'actionnement 4 et l'ensemble intermédiaire 5 sont également positionnés de telle sorte que la dent mobile 5e est apte à s'accrocher à la dent fixe 3b dans le cas où le capteur C₁ est soumis à une sollicitation en traction dépassant une amplitude de seuil, comme cela sera explicité ci-après. A cet effet, la poutre d'actionnement 5c pourra présenter une flèche lorsqu'elle est mise en place, afin de garantir le contact et donc l'accrochage malgré les incertitudes de fabrication/assemblage.

Si l'on se réfère maintenant à la Figure 3b, on peut voir qu'en cas de sollicitation du capteur C₁ en traction, qui se traduit par un éloignement des zones d'ancrage 1d et 1e, la partie de poussée 4c, qui se déplace d'un seul tenant avec la seconde partie 1b du support 1, vient pousser sur l'extrémité 5d de la poutre d'actionnement 5c, en déformant le parallélogramme déformable que constituent les poutres de liaison 5b, et déplace donc la poutre d'actionnement 5c en direction de la dent fixe 3b.

Si l'amplitude de la déformation du capteur C₁ est supérieure à un seuil de détection, qui sera défini ci-après, la dent mobile 5e passera la dent fixe 5b par déformation de la poutre d'actionnement 5c du fait de la coopération des surfaces inclinées 3f, 5g, puis reviendra se placer contre le bord 3d de la partie de fixation 3a du fait de la flèche initiale de la poutre d'actionnement 5c.

Lorsque la sollicitation en traction disparaît, les zones d'ancrage 1d, le se rapprochent et les première et seconde parties 1a, 1b du support 1 se déplacent donc dans le sens opposé, comme représenté sur la Figure 3c. L'action de la partie de poussée 4c sur la poutre d'actionnement 5c sera donc relâchée, de sorte que cette dernière serait libre de revenir à sa position initiale (Figure 3a) sous l'effet de rappel élastique procuré par les poutres de liaison 5b. Toutefois, un tel retour de la poutre d'actionnement 5c à l'état initial est empêché par la retenue de la dent mobile 5e par la dent fixe 3b, par coopération des premières surfaces de retenue 3e, 5f.

On est ainsi en mesure de savoir si le seuil d'amplitude en traction a été atteint, simplement en examinant le capteur C₁ pour déterminer si la poutre d'actionnement 5c est retenue par la dent fixe 3b en position déformée.

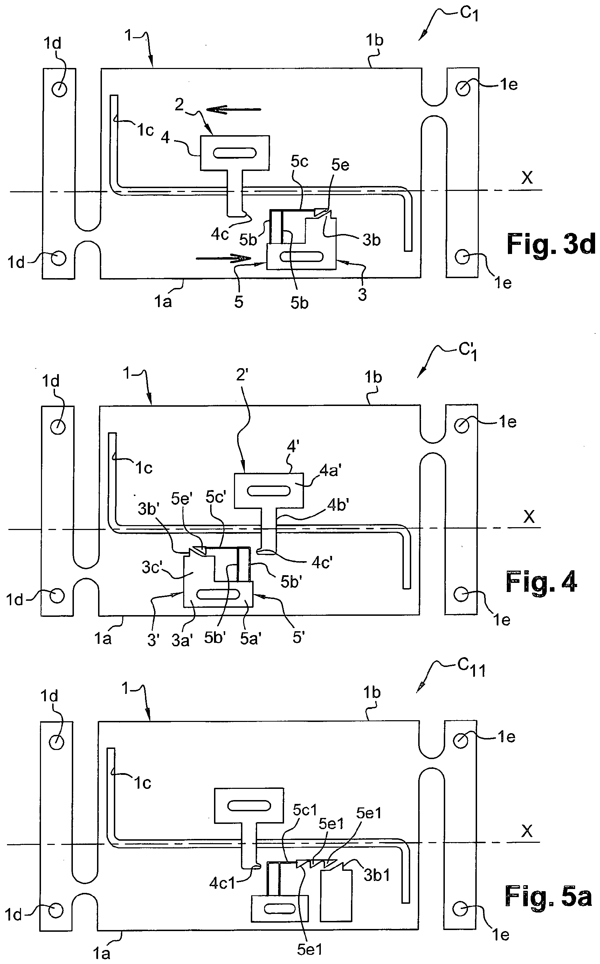

Comme indiqué ci-dessus, le capteur C₁ est un capteur pour détection d'un seuil d'amplitude de déformation en traction. On a représenté sur la Figure 3d le capteur C₁ lorsqu'il est sollicité en compression, qui se traduit par un rapprochement des zones d'ancrage 1d et le. On constate que dans ce cas la partie de poussée 4c et la poutre d'actionnement 5c sont éloignées l'une de l'autre et que cette dernière n'est donc pas déplacée en direction de la dent fixe 3b. A la fin de la sollicitation en compression, les première et seconde parties 1a, 1b du support 1 reviennent à la position initiale de la Figure 3a. Aucune mesure de la sollicitation en compression n'est effectuée par le capteur.

Le capteur C₁ selon le premier mode de réalisation autorise donc une discrimination entre une sollicitation du capteur en traction et une sollicitation du capteur C₁ en compression, en ne permettant qu'une détection des sollicitations en traction.

Si l'on se réfère à la Figure 4, on peut voir que l'on y a représenté un capteur C₁' selon une variante du premier mode de réalisation, agencé pour une détection d'un seuil d'amplitude de déformation en compression.

Le capteur C₁' comprend un dispositif d'actionnement 2' et un ensemble de mesure 3' qui sont symétriques au dispositif d'actionnement 2 et à l'ensemble de mesure 3 par rapport à un plan médian perpendiculaire à la direction X et au support 1.

Le dispositif d'actionnement 2' comprend ainsi d'une part un ensemble d'actionnement 4', comprenant une partie de fixation en O 4a', une poutre 4b' et une partie de poussée 4c', et d'autre part un ensemble intermédiaire 5' comprenant une partie de fixation 5a', deux poutres de liaison 5b' formant parallélogramme déformable, et une poutre d'actionnement 5c' portant une dent mobile 5e'. L'ensemble de mesure 3' comprend une partie de fixation 3a', une dent fixe 3b' et une portion 3c'.

L'ensemble d'actionnement 4' est cette fois-ci situé entre la poutre d'actionnement 5c' et la zone d'ancrage 1e, et l'orientation des dents fixe 3b' et mobile 5e' est inversée par rapport à celle des dents 3b et 5e.

On comprend aisément que le capteur C₁' a le même comportement en cas de sollicitation en compression que le capteur C₁ en cas de sollicitation en traction : la partie de poussée 4c' vient appuyer sur la poutre d'actionnement 5c' et, si l'amplitude de déformation en compression dépasse le seuil d'amplitude, alors la poutre d'actionnement 5c' sera maintenue en position déformée par retenue de la dent mobile 5e' par la dent fixe 3b'. De la même manière, aucune détection ne sera effectuée par le capteur C₁' en cas de sollicitation en traction.

En d'autres termes, le principe à la base de la configuration du dispositif d'actionnement 2, 2' et de l'ensemble de mesure 3, 3' est applicable à la fois aux capteurs destinés à détecter uniquement les sollicitations en traction et aux capteurs destinés à détecter uniquement les sollicitations en compression.

De plus, comme indiqué ci-dessus, cette configuration permet de déterminer si le capteur C₁, C₁' a subi une déformation en traction ou en compression supérieure ou égale à un seuil d'amplitude.

Ce seuil d'amplitude est défini par la distance que doit parcourir la partie de poussée 4c jusqu'à obtenir un déplacement de la dent mobile 5e au-delà de la position de la dent fixe 3b permettant ainsi le verrouillage de la dent mobile 5e par la dent fixe 3b, en partant de l'état initial en l'absence de sollicitation, laquelle distance étant mesurée selon la direction X.

Dans le cas où à l'état initial la partie de poussée 4c, 4c' est en contact avec la poutre d'actionnement 5c, 5c', le seuil d'amplitude est la distance entre les sommets des dents fixe 3b, 3b' et mobile 5e, 5e'. Dans le cas où à l'état initial la partie de poussée 4c, 4c' est à une distance, dite de décalage, de la poutre d'actionnement 5c, 5c', le seuil d'amplitude est la somme de la distance de décalage et de la distance entre les sommets des dents fixe 3b, 3b' et mobile 5e, 5e'. Dans les deux cas, la déformation dont l'amplitude est mesurée est celle subie par le capteur à partir de l'état initial, autrement dit sans sollicitation et sans déformation du support 1, 1'.

On souligne ici qu'en utilisant les mêmes composants formant le dispositif d'actionnement 2, 2' et l'ensemble de mesure 3, 3', on peut régler la valeur du seuil d'amplitude simplement en positionnant l'ensemble d'actionnement 4, 4' plus ou moins loin de la poutre d'actionnement 5c, 5c'.

### Première variante du premier mode de réalisation

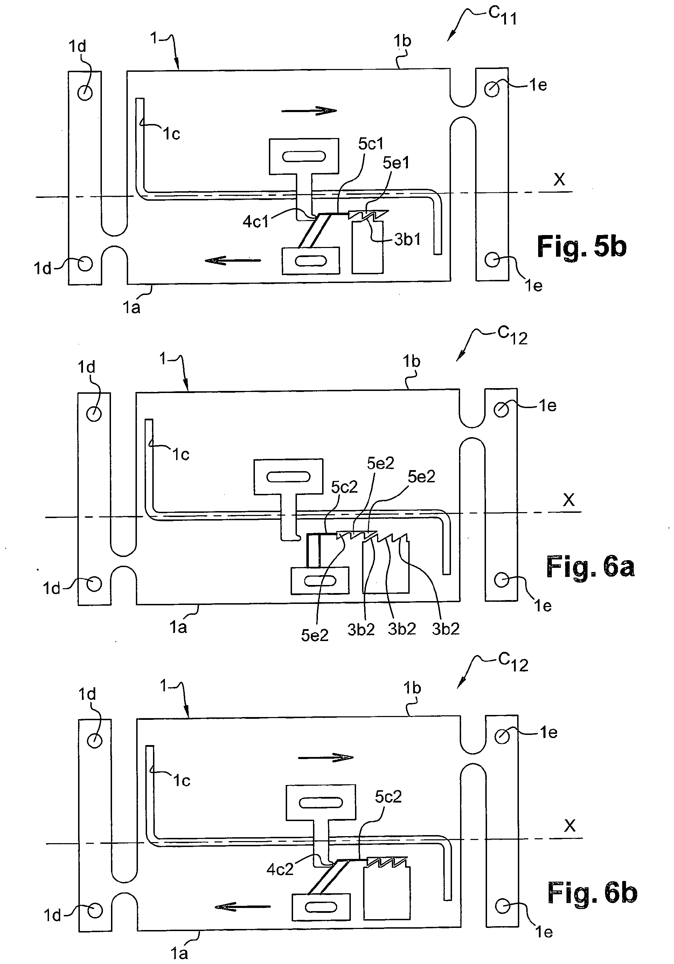

Si l'on se réfère maintenant aux Figures 5a et 5b, on peut voir que l'on y a représenté un capteur C₁₁ selon une première variante du capteur C₁ et qui diffère de ce dernier simplement par le fait que la poutre d'actionnement 5c1 de l'ensemble d'actionnement porte trois dents mobiles 5e1, et non une seule. Les dents mobiles 5el sont disposées de manière successive de façon à former une crémaillère à trois dents, avec la même orientation que la dent mobile 5e. Selon cette première variante, seule une dent fixe 3b1 est prévue, avec la même orientation que la dent fixe 3b.

Une telle configuration permet de définir trois seuils de détection d'amplitude de déformation en traction que le capteur peut détecter. Dans le cas où la partie de poussée 4c1 est au contact de la poutre d'actionnement 5c1 à l'état initial, les premier, deuxième et troisième seuils d'amplitude sont égaux à la distance entre le sommet de la dent fixe 3b1 et le sommet, respectivement, de la dent mobile 5el respectivement la plus proche de la dent fixe 3b1, de la dent mobile 5e1 centrale, et de la dent mobile 5el la plus éloignée de la dent fixe 3b1.

On a représenté sur la Figure 5b le capteur C₁₁ sollicité en traction, en particulier au moment où l'amplitude de déformation est égale au deuxième seuil d'amplitude, puisque la dent mobile 5e1 centrale est retenue par la dent fixe 3b1.

### Deuxième variante du premier mode de réalisation

Si l'on se réfère maintenant aux Figures 6a et 6b, on peut voir que l'on y a représenté un capteur C₁₂ selon une deuxième variante du capteur C₁ et qui diffère du capteur C₁₁ selon la première variante simplement par le fait que l'on a prévu trois dents fixes 3b2, et non une seule, lesquelles sont disposées de manière successive de façon à former une crémaillère à trois dents, avec la même orientation que la dent fixe 3b. La poutre d'actionnement 5c2 est identique à la poutre d'actionnement 5c1 et porte ainsi trois dents mobiles 5e2.

Le capteur C₁₂ permet également de définir trois seuils d'amplitude de détection.

### Troisième variante du premier mode de réalisation

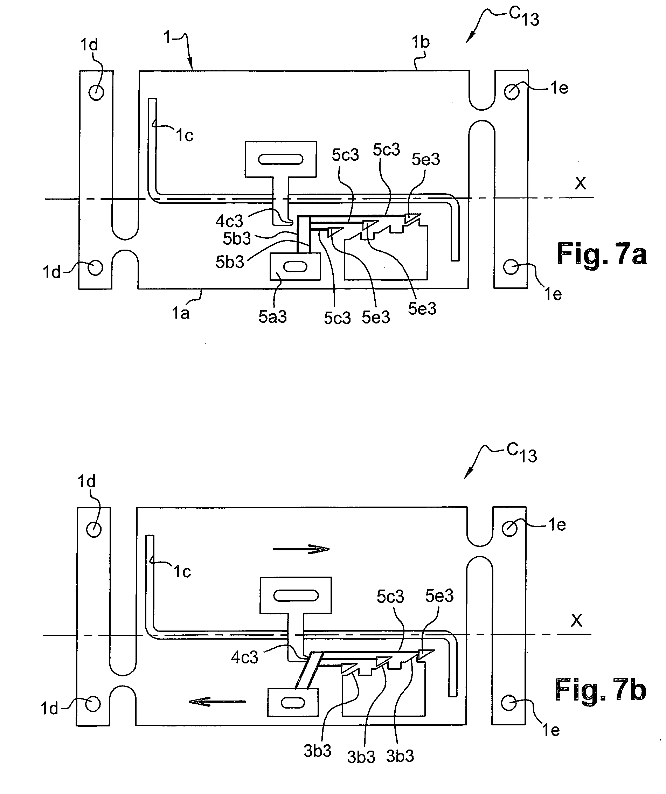

Si l'on se réfère enfin aux Figures 7a et 7b, on peut voir que l'on y a représenté un capteur C₁₃ selon une troisième variante du capteur C₁ et qui diffère de ce dernier par le fait que les deux poutres de liaison 5b3 sont solidaires de trois poutres d'actionnement 5c3 portant chacune une dent mobile 5e3, et par le fait que sont prévues trois dents fixes 3b3.

Les poutres d'actionnement 5c3 sont parallèles entre elles et à la direction X et sont espacées l'une de l'autre selon une direction transversale qui est perpendiculaire à la direction X et appartient au plan moyen du support 1. La longueur des poutres d'actionnement 5c3 est croissante, la poutre de plus petite longueur étant celle la plus proche de la partie de fixation 5a3. Comme les dents mobiles 5e3 se trouvent à l'extrémité libre des poutres d'actionnement 5c3, elles sont également espacées l'une de l'autre selon la direction X et selon ladite direction transversale. De plus, la distance entre la dent mobile 5e3 de la poutre 5c3 la plus courte et la dent mobile 5e3 de la poutre 5c3 centrale est inférieure à la distance entre la dent mobile 5e3 de la poutre 5c3 centrale et la dent mobile 5e3 de la poutre 5c3 la plus longue.

Les trois dents fixes 5b3 sont espacées l'une de l'autre d'un pas constant selon la direction X, et également selon ladite direction transversale de telle sorte qu'à chaque dent fixe 5b3 correspond une dent mobile 5e3. En particulier, la dent fixe 5b3 la plus proche de la partie de fixation 5a3 se situe sur le même axe que la dent mobile 5e3 de la poutre 5c3 la plus courte, la dent fixe 5b3 centrale se situe sur le même axe que la dent mobile 5e3 de la poutre 5c3 centrale, et la dent fixe 5b3 se situe sur le même axe que la dent mobile 5e3 restante.

L'orientation des dents fixes 5b3 et mobiles 5e3 est identique à l'orientation de la dent fixe 5b et de la dent mobile 5e, respectivement.

La configuration ci-dessus permet d'obtenir un capteur ayant trois seuils d'amplitude séparés d'une valeur inférieure à la dimension des dents mobiles et/ou fixes. En effet, on comprend bien que dans les première et deuxième variantes ci-dessus, les trois seuils d'amplitude sont séparés au minimum par le pas, qui est constant, de la crémaillère formée par les dents fixes et/ou les dents mobiles. En revanche, dans la troisième variante, on pourra prévoir que la distance entre deux dents mobiles 5e3 adjacentes ou deux fixes 5b3 adjacentes, mesurée selon la direction X, soit inférieure à la longueur de la dent 5e3 ou 5b3.

Une autre manière d'obtenir ce résultat est de définir les longueurs des poutres d'actionnement 5c3 pour que la différence entre la distance entre un couple dent mobile 5e3/dent fixe 5b3 et la distance entre le couple dent mobile 5e3/dent fixe 5b3 suivant soit inférieur à la longueur des dents, ce qui est rendu possible par le décalage des dents 5b3, 5e3 selon ladite direction transversale.

On peut ainsi obtenir des informations plus fines sur les déformations subies par le capteur C₁₃, en particulier savoir s'il a subi une déformation se rapprochant fortement d'un seuil d'amplitude correspondant à une amplitude de déformation inadmissible. Par exemple, une telle amplitude correspondrait à une retenue de la dent mobile 5e3 de la poutre 5c3 la plus courte sur la dent fixe 5b3 correspondante. Si l'on se réfère à la Figure 7b, on peut voir que l'on y a représenté le capteur C₁₃ à une amplitude de déformation en traction au voisinage mais inférieure à cette amplitude inadmissible, la partie de poussée 4c3 ayant déplacé les poutres 5c3 jusqu'à ce que la dent mobile 5e3 de la poutre 5c3 la plus longue soit retenue par la dent fixe 5b3 correspondante.

A l'évidence, la configuration des première à troisième variantes peut être appliquée à un capteur pour la mesure d'une sollicitation en compression, de la même manière que celle décrite en rapport avec la Figure 4.

Il convient également de noter que les ensembles de mesure et les ensembles intermédiaires des capteurs selon les première à troisième variantes sont formés par des plaques individuelles, mais qu'ils pourraient tout aussi bien être formés par une même plaque comme dans le premier mode de réalisation. De même, l'ensemble de mesure 3 et l'ensemble intermédiaire 5 du premier mode de réalisation pourraient être formés par deux plaques individuelles.

### Deuxième mode de réalisation : comptage de cycles de sollicitations

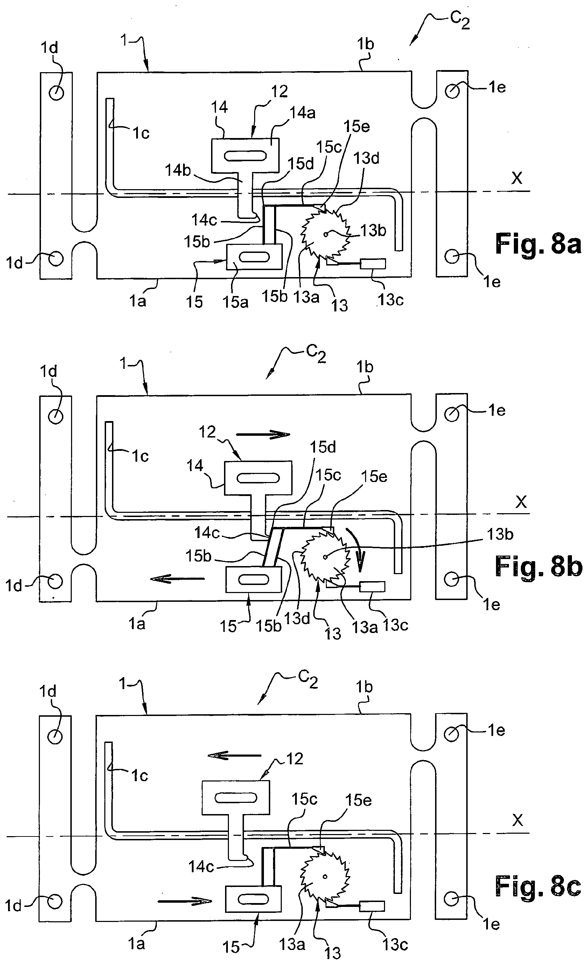

Si l'on se réfère tout d'abord à la Figure 8a, on peut voir qu'un capteur C₂ selon un deuxième mode de réalisation de la présente invention, pour comptage de cycles de sollicitations en traction, comprend un dispositif d'actionnement 12 et un ensemble de mesure 13.

Le dispositif d'actionnement 12 comprend un ensemble d'actionnement 14 et un ensemble intermédiaire 15.

L'ensemble d'actionnement 14 est identique à l'ensemble d'actionnement 4 du premier mode de réalisation, et comprend ainsi une partie de fixation 14a, une poutre 14b et une partie de poussée 14c.

L'ensemble intermédiaire 15 est analogue à l'ensemble intermédiaire 5, et comprend ainsi une partie de fixation 15a, par laquelle il est fixé à la première partie la du support 1, deux poutres de liaison 15b formant parallélogramme déformable, et une poutre d'actionnement 15c dont une première extrémité 15d sur laquelle la partie de poussée 14c est destinée à venir pousser, et portant à son extrémité libre une dent mobile 15e. La partie de poussée 14c se situe entre la poutre d'actionnement 15c et la zone d'ancrage 1d.

L'ensemble de mesure 13 comprend une roue dentée 13a montée rotative autour d'un axe 13b fixé perpendiculairement à la première partie la du support 1, et un dispositif anti-retour 13c.

Le principe de comptage de l'ensemble de mesure 13 est identique à celui de la demande EP1998145 A1 et du brevet FR2974410 B1, et qui a été décrit en détail avec référence aux Figures la à 2d.

Si l'on se réfère à la Figure 8b, on peut voir qu'en cas de sollicitation du capteur C₂ en traction, les première et seconde parties 1a, 1b du support 1 sont déplacées respectivement vers la gauche et vers la droite, et la partie de poussée 14c viendra déplacer la poutre d'actionnement 15c vers la zone d'ancrage 1e, de manière analogue à ce qui se produit pour le capteur C₁ du premier mode de réalisation. La dent mobile 15e vient alors pousser sur une dent 13d de la roue dentée 13a et faire ainsi tourner cette dernière dans le sens indiqué par la flèche, sur un angle qui équivaut à un cycle de sollicitation en traction. Lorsque le support 1 revient à l'état initial après le relâchement de la sollicitation en traction, la partie de poussée 14c relâche sa poussée sur la poutre d'actionnement 15c, jusqu'à ne plus appuyer sur cette dernière, laquelle revient alors à sa position initiale représentée sur la Figure 8a sans faire tourner la roue dentée 13a qui est retenue par le dispositif anti-retour 13c.

On peut souligner que l'on a représenté le dispositif anti-retour 13c de manière schématique, et que celui-ci est équivalent à ceux de la demande EP1998145 A1 et du brevet FR2974410 B1, en ce qu'il comprend une partie de fixation et une poutre à l'extrémité de laquelle se situe une dent orientée pour empêcher la roue dentée 13a de tourner dans le sens contraire à celui indiqué par la flèche de la Figure 8b.

Si l'on se réfère maintenant à la Figure 8c, on peut voir que, dans le cas où le support 1 est soumis à une sollicitation en compression, la partie de poussée 14c est déplacée à l'opposé de la poutre d'actionnement 15c et ne pousse donc pas sur celle-ci. L'ensemble intermédiaire 15 et l'ensemble de mesure 13 étant tous les deux solidaires de la première partie la du support 1, la dent mobile 15e reste fixe par rapport à la roue dentée 13a et ne fait donc pas tourner celle-ci. Au relâchement de la sollicitation en compression, le support 1 revient à la position initiale de la Figure 8a, où la poutre d'actionnement 15c n'est toujours pas déplacée par la partie de poussée 14c. Par conséquent, la roue dentée 13a n'est pas amenée à tourner pendant un cycle de sollicitation en compression.

On constate donc que la configuration du dispositif d'actionnement 12 et de l'ensemble de mesure 13 selon le second mode de réalisation permet de compter uniquement les cycles de sollicitation en traction, et non les cycles de sollicitation en compression. De plus ces cycles de traction sont comptés uniquement à partir d'un certain niveau de déformation correspondant à la distance initiale entre la partie de poussée 14c et l'extrémité de la poutre d'actionnement 15c, cette distance pouvant être nulle.

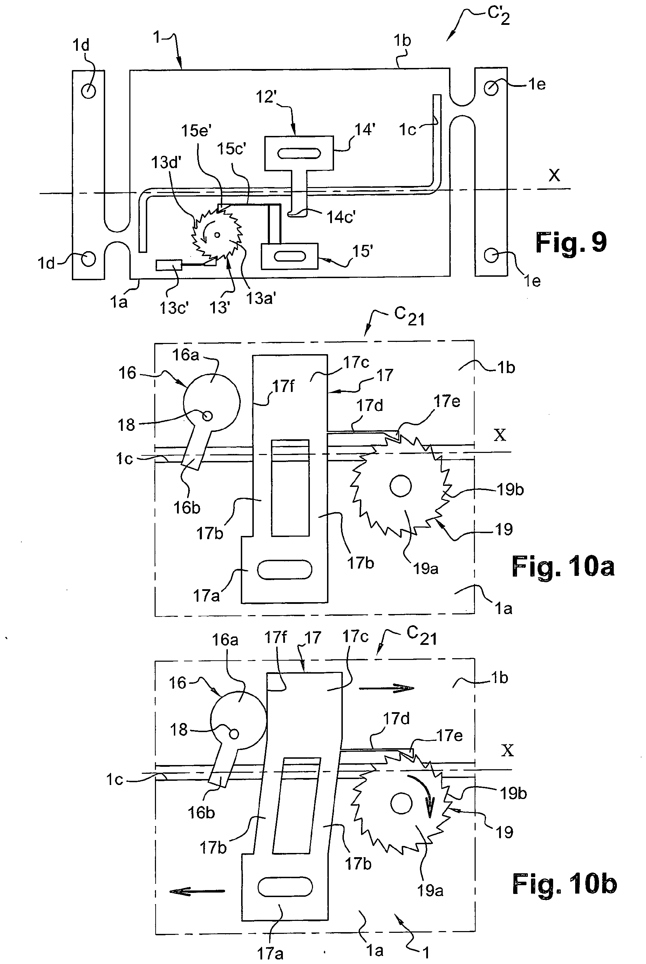

Si l'on se réfère à la Figure 9, on peut voir que l'on y a représenté un capteur C₂' selon le deuxième mode de réalisation, agencé pour une mesure de cycles de sollicitation en compression.

Le capteur C₂' comprend un dispositif d'actionnement 12' et un ensemble de mesure 13' qui sont symétriques au dispositif d'actionnement 12 et à l'ensemble de mesure 13 par rapport à un plan médian perpendiculaire à la direction X et au support 1. Le dispositif d'actionnement 12' comprend donc un ensemble d'actionnement 14' et un ensemble intermédiaire 15'. La partie de poussée 14c' se situe entre la poutre d'actionnement 15c' et la zone d'ancrage le. Les dents 13d' de la roue dentée 13a' de l'ensemble de mesure 13' et la dent mobile 15e' portée par la poutre d'actionnement 15c' sont orientées dans le sens opposé à celui du capteur C₂.

On comprend aisément que le capteur C₂' a le même comportement en cas de sollicitation en compression que le capteur C2 en cas de sollicitation en traction : la partie de poussée 14c' vient appuyer sur la poutre d'actionnement 15c' qui fait alors tourner, par la dent mobile 15e', la roue dentée 13a' selon le sens indiqué par la flèche. La roue dentée 13a' est retenue par le dispositif anti-retour 13c' lors du retour du support 1 à l'état initial. De même, en cas de sollicitation en traction, la partie de poussée 14c' sera écartée de la poutre d'actionnement 15c' et la roue dentée 13a' ne sera pas amenée à tourner. Seuls les cycles de sollicitation en compression seront donc comptés.

En d'autres termes, le principe à la base de la configuration du dispositif d'actionnement 12, 12' et de l'ensemble de mesure 13, 13' est applicable à la fois aux capteurs destinés à compter uniquement les cycles de sollicitations en traction et aux capteurs destinés à compter uniquement les cycles de sollicitations en compression.

Comme dans le cas du premier mode de réalisation, la partie de poussée 14c, 14c' peut, à l'état initial du support 1, sans sollicitation, être au contact ou à distance de l'ensemble intermédiaire 15, 15'.

Dans le cas où à l'état initial la partie de poussée 14c, 14c' est en contact avec l'ensemble intermédiaire 15, 15', l'ensemble de mesure 13, 13' comptera le nombre de cycles de sollicitations en traction ou en compression, et ce dès que la déformation due à la sollicitation a une amplitude supérieure au pas des dents de la roue dentée 13a, 13a'.

Dans le cas où à l'état initial la partie de poussée 14c, 14c' est à une distance, dite de décalage, le long de la direction X, de l'ensemble intermédiaire 15, 15', alors un cycle de sollicitation en traction ou en compression ne sera compté par la roue dentée 13a, 13a' que dans le cas où la déformation due à la sollicitation a une amplitude supérieure à la somme de ladite distance de décalage et du pas des dents de la roue dentée 13a, 13a' . En d'autres termes, ladite distance de décalage correspond à un décalage dudit niveau de seuil de comptage du cycle, à une amplitude égale à ladite distance de décalage (dans le cas où la partie de poussée 14c, 14c' est exactement sur le même axe que la poutre d'actionnement 15c, 15c') ou proportionnelle à ladite distance de décalage (dans le cas où la partie de poussée 14c, 14c' est en regard d'une poutre de liaison, comme représenté sur les Figures 8a à 9) .

Prévoir une partie de poussée 14c, 14c' à une distance de décalage de l'ensemble intermédiaire 15, 15' permet donc de ne compter que les cycles de sollicitations en traction ou en compression qui sont supérieures à un niveau de seuil défini par ladite distance de décalage.

### Première variante du deuxième mode de réalisation

Si l'on se réfère maintenant aux Figures 10a et 10b, sur lesquelles on a représenté un capteur C₂₁ selon une première variante du deuxième mode de réalisation, qui diffère du capteur C2 par la forme de l'ensemble d'actionnement et de l'ensemble intermédiaire.

L'ensemble d'actionnement est ici formé par une pièce excentrique 16 comprenant une partie 16a en forme de disque à partir de laquelle s'étend une patte 16b. La pièce excentrique 16 présente un trou traversant excentré par rapport au centre de la partie en forme de disque 16a, trou par lequel la pièce excentrique 16 est montée sur un axe 18 solidaire de la seconde partie 1b du support 1.

L'ensemble intermédiaire 17 est formé par une plaque comprenant une partie de fixation en O 17a fixée par tout moyen approprié à la première partie la du support 1, deux poutres de liaison 17b s'étendant, à l'état initial du support 1, perpendiculairement à la direction X et formant un parallélogramme déformable, une partie dite d'appui 17c solidaire des extrémités des poutres de liaison 17b, et une poutre d'actionnement 17d s'étendant à partir de la partie d'appui 17c et portant à son extrémité libre une dent mobile 17e. En particulier, la partie d'appui 17c se situe au-dessus de la seconde partie 1b du support 1 et présente un bord longitudinal 17f en regard du bord de la partie en forme de disque 16a. Des dépressions seront avantageusement prévues en correspondance de la partie d'appui 17c et de la portion de la partie en forme de disque 16a en regard du bord 17f, de manière analogue à ce qui est prévu dans l'état antérieur de la technique décrit ci-dessus.

L'ensemble de mesure 19 est analogue à l'ensemble de mesure 13 et comprend ainsi une roue dentée 19a et un dispositif anti-retour (non représenté). A l'état initial du support 1, la dent mobile 17e se situe entre deux dents 19b de la roue dentée 19a.

Dans le cas d'un cycle de sollicitation en traction du capteur C₂₁, les première et seconde parties 1a, 1b du support 1 vont se déplacer respectivement vers la gauche et vers la droite et la partie en forme de disque 16a va ainsi venir pousser sur le bord 17f de la partie d'appui 17c et déplacer cette dernière, et donc la poutre d'actionnement 17d, vers la droite en déformant le parallélogramme déformable que constitue les poutres de liaison 17b, faisant ainsi tourner la roue dentée 19a dans le sens indiqué par la flèche, de la même manière que celle décrite ci-dessus. Lors du retour à la position initiale du capteur C₂₁, la roue dentée 19a est empêchée de tourner par le dispositif anti-retour.

Dans le cas d'un cycle de sollicitation en compression, la pièce excentrique 16 sera tout d'abord écartée de la partie d'appui 17c, puis reviendra à la position initiale de la Figure 10a, de sorte que la roue dentée 19a n'est pas entraînée en rotation.

Cette première variante est donc un autre exemple de structure du dispositif d'actionnement permettant de compter uniquement les cycles de sollicitations en traction.

La pièce excentrique 16 pourrait être remplacée par une simple plaque présentant une partie de poussée analogue à celles du second mode de réalisation. Toutefois, l'intérêt d'une telle pièce excentrique 16 est qu'elle permet un réglage aisé de la distance de décalage, et donc du niveau de seuil d'amplitude à partir duquel un cycle de sollicitation sera compté.

En effet, une rotation de la pièce excentrique 16 autour de l'axe 18, la préhension de la pièce excentrique 16 étant facilitée par la patte 16b, permet d'augmenter ou de diminuer la distance entre le bord de la partie en forme de disque 16a et le bord 17f de la partie d'appui 17c. Par exemple, avec une même configuration du support 1, et en particulier un même positionnement de l'axe 18, de l'ensemble intermédiaire 17 et de l'ensemble de mesure 19, il suffira au moment de l'installation de la pièce excentrique 16 de régler la position angulaire de cette dernière à une valeur permettant d'obtenir la distance de décalage souhaitée.

On pourrait ainsi prévoir sur la face visible de la partie en forme de disque 16a des repères microgravés avec un pas angulaire donné qui correspond à un déplacement donné du bord de la partie en forme de disque 16a et du bord 17f, parmi lesquels est indiqué un repère de référence au niveau duquel la partie en forme de disque 16a est au contact de la partie d'appui 17c. Il suffit alors de placer la partie en forme de disque 16a en contact avec la partie d'appui 17c, puis de faire tourner la pièce excentrique 16 du nombre de repères correspondant au déplacement permettant d'obtenir la distance de décalage souhaité, puis de fixer en position la partie excentrique 16, par exemple par collage, comme cela est bien connu dans la technique.

On pourrait également placer la partie en forme de disque 16a directement à la bonne position angulaire par des moyens microrobotiques.

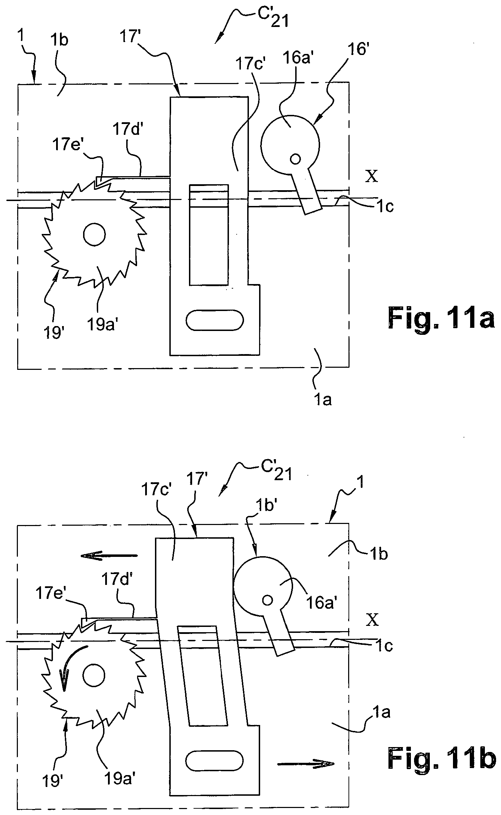

Comme on peut le voir sur les Figures 11a et 11b, la structure du dispositif d'actionnement de cette première variante est également applicable à un capteur C₂₁' pour le comptage de cycles de sollicitations en compression.

Comme précédemment, la pièce excentrique 16', l'ensemble intermédiaire 17' et l'ensemble de mesure 19' du capteur C₂₁' sont symétriques respectivement à la pièce excentrique 16, à l'ensemble intermédiaire 17 et à l'ensemble de mesure 19 par rapport à un plan médian perpendiculaire à la direction X et au support 1.

Si l'on se réfère en particulier à la Figure 11b, on peut voir que lorsque le support 1 est sollicité en compression, la partie en forme de disque 16a' vient pousser sur la partie d'appui 17c' et ainsi déplacer la poutre d'actionnement 17d' et la dent mobile 17e' de façon à faire tourner la roue dentée 19a' dans le sens indiqué par la flèche. La roue dentée 19a' est encore maintenue en position par le dispositif anti-retour (non représenté) lors du retour du support 1 à l'état initial. On comprend aisément qu'un cycle de sollicitation en traction ne sera pas compté par la roue dentée 19a'.

Là encore, la pièce excentrique 16' permet le réglage de la distance de décalage entre elle-même et la partie d'appui 17c', et donc le réglage du niveau de seuil d'amplitude à partir duquel le cycle de sollicitation en compression sera compté.

### Deuxième variante du deuxième mode de réalisation

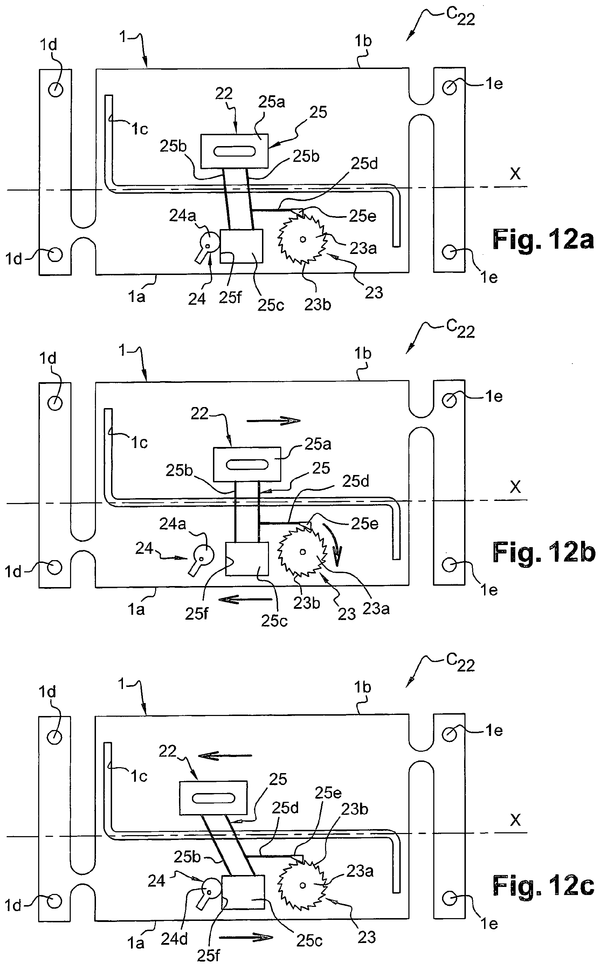

Si l'on se réfère maintenant aux Figures 12a à 12c, on peut voir que l'on y a représenté un capteur C₂₂ selon une deuxième variante du deuxième mode de réalisation et que le capteur C₂₂ diffère du capteur C₂₁ selon la première variante en ce qu'ici l'ensemble d'actionnement est solidaire de la première partie la du support 1 et que l'ensemble intermédiaire est solidaire de la seconde partie 1b du support 1.

Le dispositif d'actionnement 22 comprend ainsi d'une part un ensemble d'actionnement formé par une pièce excentrique 24 identique au pièce excentrique 16, 16', mais fixé à la première partie la du support 1, et, d'autre part, un ensemble intermédiaire 25 comprenant une partie de fixation rigide en O 25a fixée par tout moyen approprié à la seconde partie 1b du support 1, deux poutres de liaison 25b s'étendant à partir de la partie de fixation 25a s'étendant, à l'état initial du support 1, perpendiculairement à la direction X et formant un parallélogramme déformable, une partie dite d'appui 25c solidaire des extrémités des poutres de liaison 25b, et une poutre d'actionnement 25d s'étendant à partir de l'une des poutres de liaison 25b et portant à son extrémité libre une dent mobile 25e. En particulier, la région d'extrémité des poutres de liaison 25b et la partie d'appui 25c se situent au-dessus de la première partie la du support 1 et la partie d'appui présente un bord longitudinal 25f en regard du bord de la partie en forme de disque 24a. Des dépressions seront avantageusement prévues en correspondance des poutres de liaison 25b, de la partie d'appui 25c et de la portion de la partie en forme de disque 24a en regard du bord 25f, de manière analogue à ce qui est prévu dans l'état antérieur de la technique décrit ci-dessus.

La pièce excentrique 24 se situe entre la partie d'appui 25c et la zone d'ancrage 1d.

L'ensemble de mesure 23 est analogue à l'ensemble de mesure 13 et comprend ainsi une roue dentée 23a et un dispositif anti-retour (non représenté).

Une particularité de cette variante est qu'à l'état initial la pièce excentrique 24 est en appui contre la partie d'appui 25c et le parallélogramme déformable que constituent les poutres de liaison 25b est déjà déformé. La roue dentée 23a et l'ensemble intermédiaire 25 sont configurés pour que dans cet état initial la dent mobile 25e se situe entre deux dents 23b de la roue dentée 23a.

Si l'on se réfère à la Figure 12b, on peut voir qu'en cas de cycle de sollicitation en traction, la pièce excentrique 24 se déplacera vers la gauche, tandis que la partie de fixation 25a se déplacera vers la droite, ce qui conduira à un rupture du contact entre la pièce excentrique 24 et la partie d'appui 25c après une déformation correspondant au niveau de seuil d'amplitude comme cela sera explicité ci-après. Si la déformation se poursuit après cette rupture de contact, la dent mobile 25e appuiera sur une dent 23b et fera tourner la roue dentée 23a. On souligne ici que les poutres de liaison 25b seront suffisamment rigides pour résister à l'effort exercé par la dent 23b sur la dent mobile 25e, et permettre ainsi effectivement une rotation de la roue dentée 23a. Lors du retour à l'état initial, la roue dentée 23a est empêchée de tourner par un dispositif anti-retour (non représenté).

Si l'on se réfère maintenant à la Figure 12c, on peut voir qu'en cas de cycle de sollicitation en compression, les première et seconde parties 1a, 1b du support 1 se déplaceront respectivement vers la droite et vers la gauche, la pièce excentrique 24 viendra déformer encore davantage les poutres de liaison 25b, mais, étant donné que la distance entre la pièce excentrique 24 et la roue dentée 23a reste fixe, cette déformation ne se traduit pas par un déplacement de la poutre d'actionnement 25d, et donc de la dent mobile 25e, par rapport à la roue dentée 23a, de sorte que cette dernière n'est pas amenée à tourner.

La configuration de la structure du dispositif d'actionnement 22 et de l'ensemble de mesure 23 selon cette deuxième variante du deuxième mode de réalisation permet donc aussi de ne compter que les cycles de sollicitations en traction.

A l'évidence, on pourra appliquer cette configuration à un capteur pour compter les cycles de sollicitations en compression, simplement en prévoyant une structure qui est symétrique à celle de la Figure 12a par rapport à un plan médian perpendiculaire à la direction X et au support 1.

Cette configuration permet également de définir, si on le souhaite, un décalage du niveau de seuil d'amplitude à partir duquel un cycle de sollicitation en traction ou en compression sera compté.

En effet, si l'on souhaite compter tous les cycles de sollicitations, à partir d'une amplitude de déformation qui est égale au pas de la roue dentée 23a, il suffit d'installer la pièce excentrique 24 et l'ensemble intermédiaire 25 pour qu'à l'état initial la pièce excentrique 24 soit juste en contact avec la partie d'appui 25c, mais sans déformer les poutres de liaison 25b. Dans ce cas, la poutre d'actionnement 25d fera tourner la roue dentée 23a dès que l'amplitude de la déformation subie par le support 1 sera égale au pas de la roue dentée 23a.

Si l'on souhaite ne compter que les cycles de sollicitations supérieures à une valeur donnée, donc à une valeur donnée de l'amplitude de la déformation subie par le support 1, il suffit d'installer la pièce excentrique 24 et l'ensemble intermédiaire 25 pour qu'à l'état initial les poutres de liaison 25b soit déformées d'une valeur telle qu'elles ne retrouvent leur position non déformée qu'après une première déformation du support 1, comme représentée sur les Figures 12a et 12b. Plus la déformation des poutres de liaison 25b est importante, plus la distance à parcourir par la pièce excentrique 24 jusqu'à rupture du contact avec la partie d'appui 25c sera grande et plus le retard d'actionnement de la roue dentée 23a par la poutre d'actionnement 25d sera grand.

### Troisième variante du deuxième mode de réalisation

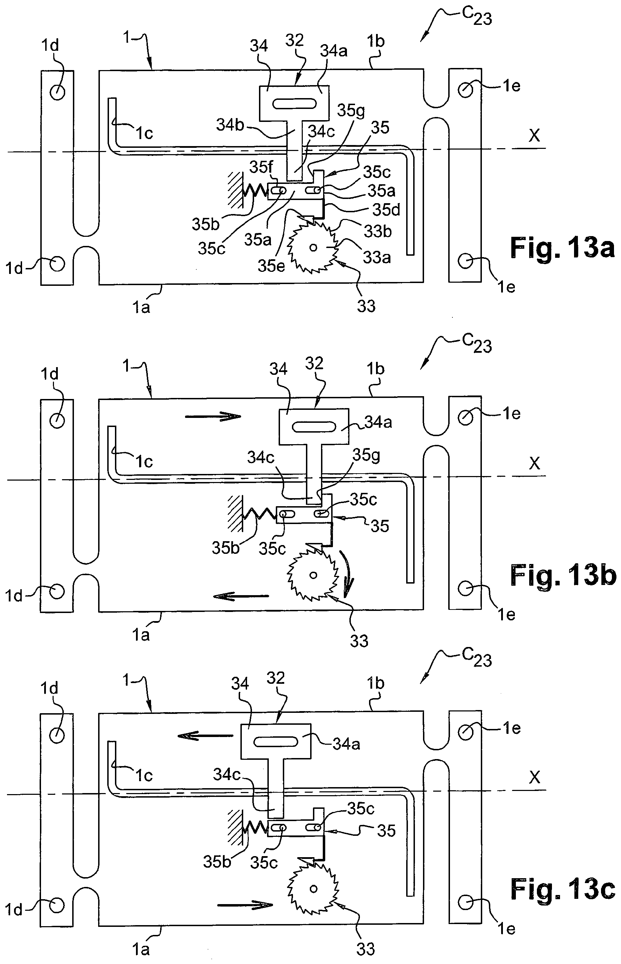

Si l'on se réfère maintenant aux Figures 13a à 13c, on peut voir que l'on y a représenté un capteur C₂₃ selon une troisième variante du deuxième mode de réalisation, qui comprend un dispositif d'actionnement 32 et un ensemble de mesure 33.

Le dispositif d'actionnement 32 comprend un ensemble d'actionnement 34 et un ensemble intermédiaire 35.

L'ensemble d'actionnement 34 est analogue à l'ensemble d'actionnement 14, et comprend ainsi une partie de fixation rigide 34a fixée à la seconde partie 1b du support 1, une poutre 35b s'étendant à partir de la partie de fixation 34a et jusqu'au-dessus de la première partie la du support 1, en s'achevant en une région d'extrémité formant une partie de poussée 35c.

L'ensemble intermédiaire 35 comprend une pièce intermédiaire 35a, un ressort de traction 35b dont une extrémité est solidaire de la première partie la du support 1 et dont l'autre extrémité est en appui contre un côté de la pièce intermédiaire 35a, des moyens 35c de guidage du déplacement de la pièce intermédiaire 35a, et une poutre d'actionnement 35d dont une extrémité, pliée d'équerre, porte une dent dite mobile 35e.

La pièce intermédiaire 35a est en forme de L, deux trous oblongs 35f, de direction longitudinale parallèle à la direction X, étant répartis dans la portion longitudinale de la pièce intermédiaire 35a, la base du L étant opposée au ressort 35b et dirigée vers la seconde partie 1b du support 1, offrant ainsi une face 35g tournée vers la zone d'ancrage 1d de la première partie la du support 1. Les moyens de guidage 35c sont formés par deux axes s'étendant à partir de la première partie la du support 1 et chacun à travers un trou oblong 35f respectif.

A partir de l'angle entre la base et la portion longitudinale du L formé par la pièce intermédiaire 35a s'étend la poutre d'actionnement 35d, en direction de la zone d'ancrage 1d. La dent mobile 35e est orientée de la même manière que la dent 15e du capteur C₂ selon le deuxième mode de réalisation.

L'ensemble d'actionnement 34 et la pièce intermédiaire 35 sont positionnés de telle sorte qu'à l'état initial la partie de poussée 34c est à une distance de la face 35g de la pièce intermédiaire 35a et que la dent mobile 35e se situe entre deux dents 33b de la roue dentée 33a.

Si l'on se réfère à la Figure 13b, on peut voir que dans le cas d'un cycle de sollicitation en traction du capteur C₂₃, les première et seconde parties 1a, 1b du support 1 vont se déplacer respectivement vers la gauche et vers la droite, et la partie de poussée 34c va ainsi venir pousser contre la face 35g de la pièce intermédiaire 35a et déplacer cette dernière, et donc la dent mobile 35e, vers la droite, faisant ainsi tourner dans le sens indiqué par la flèche la roue dentée 33a qui est elle déplacée vers la gauche. Lors du retour à la position initiale du capteur C₂₃, la roue dentée 33a est empêchée de tourner par le dispositif anti-retour (non représenté).

Si l'on se réfère à la Figure 13c, on peut voir que dans le cas d'un cycle de sollicitation en compression, la partie de poussée 34c s'éloignera de la face 35g de la pièce intermédiaire 35a et, du fait de la forme de L de cette dernière, la partie de poussée 34c n'agira pas sur la pièce intermédiaire 35a. Cette dernière restera donc immobile par rapport à la roue dentée 33a, de sorte que le cycle de sollicitation en compression ne sera pas compté.

A l'évidence, on pourra appliquer cette configuration à un capteur pour compter les cycles de sollicitations en compression, simplement en prévoyant une structure qui est symétrique à celle de la Figure 13a par rapport à un plan médian perpendiculaire à la direction X et au support 1.

Cette configuration permet également de définir, si on le souhaite, un décalage du niveau de seuil d'amplitude à partir duquel un cycle de sollicitation en traction ou en compression sera compté.

En effet, si l'on souhaite compter tous les cycles de sollicitations, à partir d'une amplitude de déformation qui est égale au pas de la roue dentée 33a, il suffit d'installer l'ensemble d'actionnement 34 et la pièce intermédiaire 35a pour qu'à l'état initial la partie de poussée 34c soit juste en contact avec la face 35g, mais sans appuyer sur celle-ci. Dans ce cas, la poutre d'actionnement 35d fera tourner la roue dentée 33a dès que l'amplitude de la déformation subie par le support 1 sera égale au pas de la roue dentée 33a.

Si l'on souhaite ne compter que les cycles de sollicitations supérieures à une valeur donnée, donc à une valeur donnée de l'amplitude de la déformation subie par le capteur 1, il suffit d'installer l'ensemble d'actionnement 34 pour qu'à l'état initial la partie de poussée 34c soit à une distance de la face 35g de la pièce intermédiaire 35a, cette distance étant égale à la distance de décalage du niveau de seuil d'amplitude de déformation à partir duquel le cycle de sollicitation sera compté par la roue dentée 33a.

### Troisième mode de réalisation : mesure de sollicitation en traction et en compression par un même capteur, avec discrimination

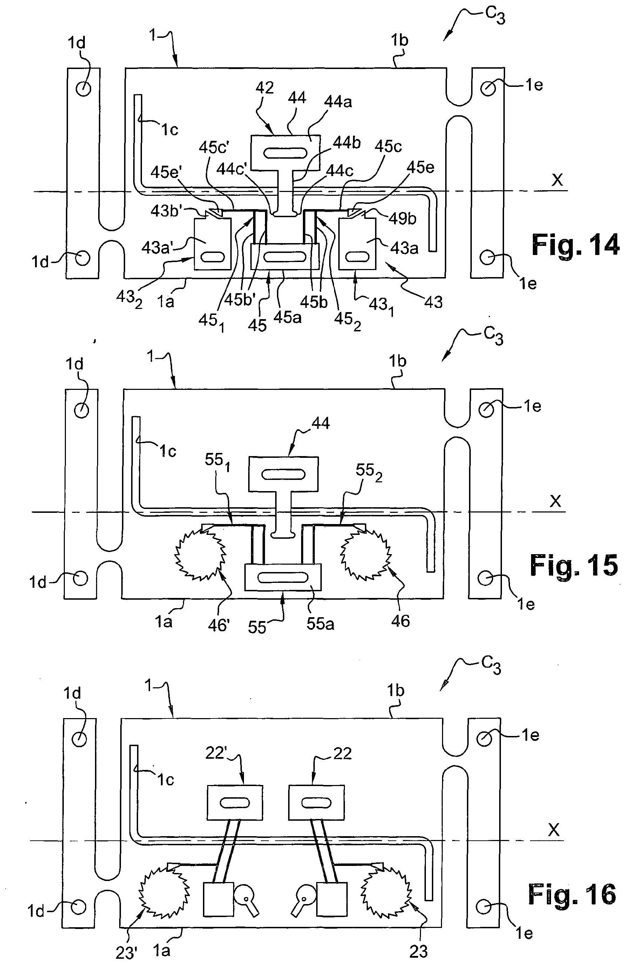

Si l'on se réfère maintenant à la Figure 14, on peut voir que l'on y a représenté une vue schématique d'un capteur C₃ selon un troisième mode de réalisation de la présente invention, lequel comprend un dispositif d'actionnement 42 et deux ensembles de mesure 43.

Le dispositif d'actionnement 42 comprend un ensemble d'actionnement 44 et un ensemble intermédiaire 45.

L'ensemble d'actionnement 44 est identique à l'ensemble d'actionnement 4 du capteur C₁ selon le premier mode de réalisation, et comprend ainsi une partie de fixation en O 44a, fixée à la seconde partie 1b du support 1, et une poutre 44b s'étendant jusqu'au-dessus de la première partie la du support 1, mais diffère en ce qu'il comporte deux parties de poussée 44c et 44c', une de chaque côté de l'extrémité libre de la poutre 44b. Comme on le comprendra facilement, la partie de poussée 44c correspond à la partie de poussée 4c du capteur C₁ et la partie de poussée 44c' correspond à la partie de poussée 4c' du capteur C₁'.

L'ensemble intermédiaire 45 consiste en une combinaison des ensembles intermédiaires des capteurs C₁ et C₁' : il comprend une partie de fixation en O 45a, fixée à la première partie la du support 1, à partir de laquelle s'étend des premier et second sous-ensembles intermédiaires 45₁ et 45₂, respectivement sur le côté zone d'ancrage le de la seconde partie 1b et côté zone d'ancrage 1d de la première partie la du support, comprenant chacun deux poutres de liaison 45b/45b', une poutre d'actionnement 45c/45c' et une dent mobile 45e/45e' identiques aux poutres de liaison 5b/5b', à la poutre d'actionnement 5c/5c' et à la dent mobile 4e/4e' du capteur C₁/C₁'.

L'ensemble de mesure 43 comprend des premier et second sous-ensembles de mesure 43₁ et 43₂ correspondant, respectivement, aux ensembles de mesure 3 et 3' des capteurs C₁/C₁', et comprenant donc respectivement une partie de fixation 43a, 43a' et une dent fixe 43b, 43b' sur le même axe que la dent mobile 45e, 45e', respectivement.

Le premier sous-ensemble intermédiaire 45₁ et le premier sous-ensemble de mesure 43₁ coopèrent de la même manière que l'ensemble intermédiaire 5 et l'ensemble de mesure 3 du capteur C₁, pour une mesure en traction, tandis que le second sous-ensemble intermédiaire 45₂ et le second sous-ensemble de mesure 43₂ coopèrent de la même manière que l'ensemble intermédiaire 5' et l'ensemble de mesure 3' du capteur C₁', pour une mesure en compression.

On comprendra aisément qu'en cas de sollicitation du capteur C₃ en traction, la partie de poussée 44c viendra pousser sur la poutre d'actionnement 45c et, si l'amplitude de déformation du support 1 est supérieure à l'amplitude de seuil de mesure, la dent mobile 45e sera retenue par la dent fixe 43b, tandis que la partie de poussée 44c' sera éloignée de la poutre d'actionnement 45c'. Au contraire, en cas de sollicitation du capteur C₃ en compression, c'est l'inverse qui se produira et la dent mobile 45e' sera retenue par la dent fixe 43b'.

Le capteur C₃ selon le troisième mode de réalisation permet donc de déterminer si une sollicitation supérieure à une valeur de seuil a été subie par le capteur C₃, et donc par la structure à surveiller, que la sollicitation soit en compression ou en traction. Ceci est particulièrement avantageux dans les cas où il n'est pas possible de disposer plusieurs capteurs sur une zone spécifique de la structure à surveiller, par exemple car elle est de petite dimension.

On comprendra aisément qu'il est ici encore possible de régler l'amplitude de seuil de mesure par ajustement de la distance entre les parties de poussée 44c, 44c' et les poutres d'actionnement 45c, 45c'.

Cette combinaison des systèmes de détection sur un seul capteur peut être généralisée à tous les dispositifs d'actionnement et ensembles de mesure décrits ci-dessus.

On a ainsi représenté sur la Figure 15 un capteur C₃₁ selon une première variante du troisième mode de réalisation, qui a un dispositif d'actionnement comprenant l'ensemble d'actionnement 44 et un ensemble intermédiaire 55 comprenant une partie de fixation 55a identique à la partie de fixation 45a et des premier et second sous-ensembles intermédiaires 55₁ et 55₂ identiques respectivement à celui formé par les deux poutres de liaison 15b, la poutre d'actionnement 15d et la dent mobile 15e du capteur C2 du deuxième mode de réalisation (Figures 8a à 8c), et à celui formé par les poutres de liaison, la poutre d'actionnement 15d' et la dent mobile 15e' du capteur C₂' (Figure 9).

Les sous-ensembles de mesure 43₁, 43₂ sont remplacés par des sous-ensembles de mesure à roue dentée 46, 46' correspondant respectivement aux ensembles de mesure 13 et 13' du deuxième mode de réalisation et de sa variante (Figures 8a à 9). Les dispositifs anti-retour n'ont pas été représentés.

On comprend là encore aisément qu'en cas de cycle de sollicitation en traction, le premier sous-ensemble intermédiaire 55₁ actionnera l'ensemble de mesure 46 pour compter un cycle, et le second sous-ensemble intermédiaire 55₂ n'actionnera pas l'ensemble de mesure 46'. L'inverse se produit en cas de cycle de sollicitation en compression.

Dans les deux exemples des Figures 14 et 15, une seule partie de fixation est utilisée pour relier les sous-ensembles d'actionnement à la première partie la du support 1. Il est également possible de tout simplement installer sur le support 1 deux systèmes de détection selon la présente invention, l'un agencé pour la mesure en traction et l'autre pour la mesure en compression. On a représenté sur la Figure 16 un exemple d'une telle installation avec un système de détection selon la deuxième variante du deuxième mode de réalisation (Figures 12a à 12c). On a ainsi installé côté zone d'ancrage le de la seconde partie 1b du support 1 un dispositif d'actionnement 22 et un ensemble de mesure 23, et côté zone d'ancrage 1d de la première partie la du support 1, un dispositif d'actionnement 22' et un ensemble de mesure 23' qui sont symétriques du dispositif d'actionnement 22 et de l'ensemble de mesure 23.

Il est bien entendu que les modes de réalisation ci-dessus de la présente invention ont été donnés à titre indicatif et non limitatif et que des modifications pourront y être apportées sans que l'on s'écarte pour autant du cadre de la présente invention tel que défini par les revendications.

Ainsi, par exemple, dans le cas d'une application au comptage du nombre de cycles de sollicitations, on pourra avantageusement ajouter un dispositif de limitation de l'actionnement de la roue dentée. Ce dispositif de limitation pourra être analogue à celui du brevet français FR2974410 B1. Si l'on prend l'exemple de la première variante du deuxième mode de réalisation (Figures 10a et 10b), ce dispositif de limitation pourra consister en une poutre rigide s'étendant parallèlement à la poutre d'actionnement 17d, au voisinage de cette dernière, côté opposé à la roue dentée 19a, et en un axe solidaire de la première partie la du support 1 et disposé à une position analogue à celle représentée sur la Figure 2c. On pourra ainsi garantir qu'un déplacement supérieur au pas P de la roue dentée ne provoque une rotation de la roue dentée que d'un angle correspondant à une seule dent.

## Revendications

1. Capteur passif (C₁, C'₁, C₁₁, C₁₂, C₁₃ ; C₂, C'₂, C₂₁, C'₂₁, C₂₂, C₂₃ ; C₃) de déformation(s) subie (s) par une structure selon une direction (X) dite de mesure, le capteur (C₁, C'₁, C₁₁, C₁₂, C₁₃ ; C₂, C'₂, C_{21,} C'₂₁, C₂₂, C₂₃ ; C₃) comprenant un système de détection d'une variation de distance entre deux points ou zones d'une structure, et un support (1) possédant une première partie (1a) et une seconde partie (1b) configurées pour être fixées respectivement à l'un et à l'autre desdits deux points ou zones de la structure, de sorte que lorsque l'une des première et seconde parties (1a, 1b) se déplace dans un sens le long de la direction de mesure (X), l'autre des première et seconde parties (1a, 1b) se déplace dans le sens opposé, le système de détection comprenant :
- un ensemble de mesure de déformation (3, 3' ; 13, 13', 19, 19', 23, 33 ; 43, 46, 46') porté par la première partie (1a) du support (1) et actionnable uniquement dans un sens, dit de mesure, de la direction de mesure (X) pour mesurer et mémoriser l'une parmi l'amplitude d'une déformation et le nombre de cycles de déformations,
- un dispositif d'actionnement (2, 2' ; 12, 12', 22, 32 ; 42) comprenant un élément d'actionnement (5c, 5c', 5c1, 5c2, 5c3 ; 15c, 15c', 15d, 15d', 17d, 17d', 25d, 35d ; 45c, 45c', 45d') qui est déplaçable suivant la direction de mesure et est configuré pour actionner l'ensemble de mesure de déformation (3, 3' ; 13, 13', 19, 19', 23, 33 ; 43, 46, 46') lorsque l'élément d'actionnement (5c, 5c', 5c1, 5c2, 5c3 ; 15c, 15c', 15d, 15d', 17d, 17d', 25d, 35d ; 45c, 45c', 45d') est déplacé dans la direction de mesure, par suite d'un déplacement relatif des première et seconde parties (1a, 1b) du support (1), **caractérisé par le fait que** le dispositif d'actionnement (2, 2' ; 12, 12', 22, 32 ; 42) comprend :
- un ensemble intermédiaire (5, 5' ; 15, 15', 17, 17', 25, 35 ; 45, 55) comprenant :
- une partie de fixation (5a, 5a3 ; 15a, 17a, 25a ; 45a, 55a) par laquelle l'ensemble intermédiaire (5, 5' ; 15, 15', 17, 17', 25, 35 ; 45, 55) est porté par l'une des première et seconde parties (1a, 1b) du support (1),
- l'élément d'actionnement (5c, 5c', 5c1, 5c2, 5c3 ; 15c, 15c', 15d, 15d', 17d, 17d', 25d, 35d ; 45c, 45c'), et
- une liaison élastique (5b, 5b', 5b3 ; 15b, 17b, 25b, 35b ; 45b, 45b') entre la partie de fixation (5a, 5a3 ; 15a, 17a, 25a ; 45a, 55a) et l'élément d'actionnement (5c, 5c', 5c1, 5c2, 5c3 ; 15c, 15c', 15d, 15d', 17d, 17d', 25d, 35d ; 45c, 45c'), et
- un ensemble d'actionnement (4, 4' ; 14, 14', 16, 16', 24, 34 ; 44) solidaire de celle des première et seconde parties (1a, 1b) du support (1) qui ne porte pas l'ensemble intermédiaire (5, 5' ; 15, 15', 17, 17', 25, 35 ; 45, 55), et possédant une partie dite de poussée (4c, 4c', 4c1, 4c3 ; 14c, 14c', 16a, 16a', 24a, 34c, 35c ; 44c, 44c') qui est dirigée dans le sens de mesure, l'ensemble d'actionnement (4, 4' ; 14, 14', 16, 16', 24, 34 ; 44) étant configuré de telle sorte que :
- lorsque l'ensemble intermédiaire (5, 5' ; 15, 15', 17, 17', 35 ; 45, 55) est porté par la première partie (1a) du support (1), la partie de poussée (4c, 4c', 4c1, 4c3 ; 14c, 14c', 16a, 16a', 34c, 35c ; 44c, 44c') est en regard de l'ensemble intermédiaire (5, 5' ; 15, 15', 17, 17', 35 ; 45, 55) de façon à exercer sur ce dernier une poussée dans le sens de mesure lors d'un déplacement de la seconde partie (1b) du support (1) dans le sens de mesure, déplaçant ainsi l'élément d'actionnement (5c, 5c', 5c1, 5c2, 5c3 ; 15c, 15c', 15d, 15d', 17d, 17d', 35d ; 45c, 45c') dans le sens de mesure pour actionner l'ensemble de mesure de déformation (3, 3' ; 13, 13', 19, 19', 33 ; 43, 46, 46'), mais à n'exercer aucune action sur l'ensemble intermédiaire (5, 5' ; 15, 15', 17, 17', 35 ; 45, 55) lors d'un déplacement de la seconde partie (1b) du support (1) dans un second sens qui est opposé au sens de mesure ; et
- lorsque l'ensemble intermédiaire (25) est porté par la seconde partie (1b) du support (1), la partie de poussée (24a) est en regard de l'ensemble intermédiaire (25) de façon à n'exercer aucune action sur ce dernier lors d'un déplacement de la seconde partie (1b) du support (1) dans le sens de mesure, l'élément d'actionnement (25d) étant ainsi déplacé conjointement avec la seconde partie (1b) du support (1) dans le sens de mesure pour actionner l'ensemble de mesure de déformation (23), mais à exercer une poussée sur l'ensemble intermédiaire (25) lors d'un déplacement de la seconde partie (1b) du support (1) dans le sens opposé au sens de mesure, afin d'empêcher tout déplacement relatif entre l'élément d'actionnement (25d) et l'ensemble de mesure de déformation (23),
ce par quoi l'ensemble de mesure de déformation (3, 3' ; 13, 13', 19, 19', 23, 33 ; 43, 46, 46') ne sera actionné que lors d'un déplacement de la seconde partie (1b) du support (1) dans le sens de mesure, permettant ainsi une discrimination de mesure entre une sollicitation du capteur (C₁, C'₁, C₁₁, C₁₂, C₁₃ ; C₂, C'₂, C₂₁, C₂₁, C₂₂, C₂₃ ; C₃) en traction et une sollicitation du capteur (C₁, C'₁, C₁₁, C₁₂, C₁₃ ; C₂, C'₂, C₂₁, C'₂₁, C₂₂, C₂₃ ; C₃) en compression.

2. Capteur (C₁, C'₁, C₁₁, C₁₂, C₁₃ ; C₃) selon la revendication 1, l'ensemble intermédiaire (5, 5' ; 45) étant porté par la première partie (1a) du support (1) et l'ensemble d'actionnement (4, 4' ; 44) étant solidaire de la seconde partie (1b) du support (1), **caractérisé par le fait que** l'ensemble de mesure de déformation (3, 3' ; 43) comprend au moins une dent fixe (3b, 3b', 3b1, 3b2, 3b3 ; 43b, 43b') et l'élément d'actionnement (5c, 5c', 5c1, 5c2, 5c3 ; 45c, 45c') comprend au moins une dent (5e, 5e', 5e1, 5e2, 5e3 ; 45e, 45e'), dite mobile, la ou chaque dent fixe (3b, 3b', 3b1, 3b2, 3b3 ; 43b, 43b') offrant une face de retenue (3e) dirigée dans le sens de mesure et configurée pour autoriser un déplacement de la ou des dents mobiles (5e, 5e', 5el, 5e2, 5e3 ; 45e, 45e') au-delà de ladite dent fixe (3b, 3b', 3b1, 3b2, 3b3 ; 43b, 43b') par suite d'un déplacement de la seconde partie (1b) du support (1) dans le sens de mesure, mais retenir la ou l'une des dents mobiles (5e, 5e', 5e1, 5e2, 5e3 ; 45e, 45e') lorsque l'élément d'actionnement (5c, 5c', 5c1, 5c2, 5c3 ; 45c, 45c') se déplace dans le second sens sous l'action de la liaison élastique (5b, 5b', 5b3 ; 45b, 45b'), après s'être déplacée au-delà de ladite dent fixe (3b, 3b', 3b1, 3b2, 3b3 ; 43b, 43b').

3. Capteur (C₁₃) selon la revendication 2, **caractérisé par le fait que** l'ensemble de mesure de déformation (3) comprend plusieurs dents fixes (3b3), espacées les unes des autres dans le sens de mesure et dans une direction orthogonale au sens de mesure, de préférence situées dans un même plan, et l'élément, d'actionnement (5c3) comprend plusieurs dents mobiles (5e3) également espacées les unes des autres de telle sorte que chaque dent mobile (5e3) se situe sur l'axe d'une dent fixe correspondante (3b3), les dents mobiles (5e3) et/ou les dents fixes (3b3) étant espacées les unes des autres d'un pas inférieur à la longueur des dents mobiles (5e3) et/ou fixes (3b3).

4. Capteur (C₁, C'₁, C₁₁, C₁₂, C₁₃ ; C₃) selon l'une des revendications 2 et 3, **caractérisé par le fait que** l'élément d'actionnement (5c, 5c', 5c1, 5c2, 5c3 ; 45c, 45c') est formé par au moins une poutre dite d'actionnement, l'au moins une poutre d'actionnement (5c, 5c', 5c1, 5c2, 5c3 ; 45c, 45c') comportant une ou plusieurs dents mobiles (5e, 5e', 5e1, 5e2, 5e3 ; 45e, 45e'), et la liaison élastique (5b, 5b', 5b3 ; 45b, 45b') comprend au moins deux poutres de liaison parallèles ayant chacune une première extrémité solidaire de la partie de fixation (5a, 5a3 ; 45a) et une seconde extrémité solidaire de l'au moins une poutre d'actionnement (5c, 5c', 5c1, 5c2, 5c3 ; 45c, 45c'), les au moins deux poutres de liaison (5b, 5b', 5b3 ; 45b, 45b') formant un parallélogramme déformable.

5. Capteur (C₂, C'₂, C₂₁, C'₂₁, C₂₂, C₂₃ ; C₃) selon la revendication 1, **caractérisé par le fait que** l'ensemble de mesure de déformation (13, 13', 19, 19', 23, 33 ; 43, 46, 46') est une roue dentée (13a, 13a', 19a, 19a', 23a, 33a) montée rotative sur la première partie (1a) du support (1) et l'élément d'actionnement (15c, 15c', 15d, 15d', 17d, 17d' , 25d, 35d) est formé par une poutre, dite d'actionnement, comportant dans une région d'extrémité au moins une dent (15e, 15e', 17e, 17e', 25e, 35e) s'étendant entre deux dents (13d, 13d', 19b, 23b, 33b) de la roue dentée (13a, 13a', 19a, 19a', 23a, 33a) de façon à constituer un engrenage avec les dents (13d, 13d', 19b, 23b, 33b) de la roue dentée (13a, 13a', 19a, 19a', 23a, 33a) .

6. Capteur (C₂, C'₂, C₂₃ ; C₃) selon la revendication 5, l'ensemble intermédiaire (15, 15', 35 ; 55) et l'ensemble d'actionnement (14, 14', 34 ; 44) étant portés par la première (1a) et la seconde partie .(lb) du support (1), respectivement, **caractérisé par le fait que** l'ensemble d'actionnement (14, 14', 34 ; 44) s'étend en porte-à-faux au-dessus de la première partie (1a) du support (1), la région d'extrémité de l'ensemble d'actionnement (14, 14', 34 ; 44) qui se situe en porte-à-faux présentant la partie de poussée (14c, 14c', 34c ; 44c, 44c'), la partie de poussée (14c, 14c', 34c ; 44c, 44c') étant en contact ou à distance de l'ensemble intermédiaire (15, 15', 35 ; 55).

7. Capteur (C₂₁, C'₂₁) selon la revendication 5, l'ensemble intermédiaire (17, 17') et l'ensemble d'actionnement (16, 16') étant portés par la première (1a) et la seconde partie (1b) du support (1), respectivement, **caractérisé par le fait que** l'ensemble intermédiaire (17, 17') comprend, s'étendant à partir de l'extrémité de la liaison élastique (17b) opposée à la partie de fixation (17a) de l'ensemble intermédiaire (17, 17'), une partie d'appui (17c, 17c') qui est en porte-à-faux au-dessus de la seconde partie (1b) du support (1) et contre laquelle la partie de poussée (16a, 16a') exercera une poussée en cas de déplacement de la seconde partie (1b) du support (1) dans le sens de mesure.

8. Capteur (C₂₂ ; C₃) selon la revendication 5, l'ensemble intermédiaire (25) et l'ensemble d'actionnement (24) étant portés par la seconde (1b) et la première partie (1a) du support (1), respectivement, **caractérisé par le fait que** l'ensemble intermédiaire (25) comprend, s'étendant à partir de l'extrémité de la liaison élastique (25b) opposée à la partie de fixation (25a) de l'ensemble intermédiaire (25), une partie d'appui (25c) qui est en porte-à-faux au-dessus de la première partie (1a) du support (1) et contre laquelle la partie de poussée (24a) exercera une poussée en cas de déplacement de la seconde partie (1b) du support (1) dans le sens opposé au sens de mesure, la partie de poussée (24a) étant, de préférence, positionnée de façon à maintenir la poutre d'actionnement (25d), à l'encontre de l'action de rappel de la liaison élastique (25b), dans une position décalée, dans le sens de mesure, de celle que la poutre d'actionnement (25d) occuperait en l'absence de la partie de poussée (24a).

9. Capteur (C₂₁, C'₂₁, C₂₂ ; C₃) selon l'une des revendications 7 et 8, **caractérisée par le fait que** l'ensemble d'actionnement (16, 16', 24) comprend une partie en forme de disque (16a, 16a', 24a) dont le bord extérieur constitue la partie de poussée, la partie en forme de disque (16a, 16a', 24a) étant montée à rotation autour d'un axe de rotation excentré vis-à-vis du centre de la partie en forme de disque (16a, 16a', 24a), de telle sorte qu'une rotation de la partie en forme de disque (16a, 16a', 24a) permet de faire varier soit la distance entre la partie de poussée (16a, 16a') et la partie d'appui (17c, 17c') de l'ensemble intermédiaire (17, 17', 25), soit la distance entre la position décalée dans laquelle la poutre d'actionnement (25d) est maintenue et celle qu'elle occuperait en l'absence de l'ensemble d'actionnement (24).

10. Capteur (C₂₃) selon la revendication 6, **caractérisé par le fait que** l'élément d'actionnement (35) est formé par une pièce intermédiaire comportant, d'une part, au moins une dent (35e) s'étendant entre deux dents (33b) de la roue dentée (33a) de façon à constituer un engrenage avec les dents (33b) de la roue dentée (33) et, d'autre part, un évidement dans lequel s'étend la partie de poussée (34c) de l'ensemble d'actionnement (34), l'évidement présentant une face d'appui (35g) qui est opposée à la partie de poussée (34c), et de préférence également à distance de la partie de poussée (34c).

11. Capteur (C₂, C'₂, C₂₁, C'₂₁, C₂₂, C₂₃ ; C₃) selon l'une des revendications 6 à 9, **caractérisé par le fait que** la liaison élastique (15b, 17b, 25b ; 45b, 45b') de l'ensemble intermédiaire (15, 15', 17, 17', 25 ; 55) comprend au moins deux poutres de liaison parallèles, orthogonales à la direction de mesure et ayant chacune une première extrémité solidaire de la partie de fixation (15a, 17a, 25a ; 55a) et une seconde extrémité solidaire de la poutre d'actionnement (15c, 15c', 15d, 15d', 17d, 17d', 25d), les au moins deux poutres de liaison (15b, 17b, 25b ; 45b, 45b') formant un parallélogramme déformable.

12. Capteur (C₃) selon l'une des revendications 1 à 11, **caractérisé par le fait qu'**il comprend un second ensemble de mesure de déformation (43₁, 43₂, 46, 46', 23, 23') porté par la première partie (1a) du support (1) et actionnable uniquement dans un second sens de mesure, opposé au premier sens de mesure, pour mesurer et mémoriser l'une parmi l'amplitude d'une déformation et le nombre de cycles de déformations, et **par le fait que** le dispositif d'actionnement (42, 44, 22, 22') comprend :
- un second ensemble intermédiaire (45₁, 45₂, 55₁, 55₂) comprenant :
- une seconde partie de fixation (45a, 55a) par laquelle le second ensemble intermédiaire (45₁, 45₂, 55₁, 55₂) est porté par l'une des première et seconde parties (1a, 1b) du support (1),
- un second élément d'actionnement (45c, 45c') déplaçable suivant la direction de mesure et configuré pour actionner le second ensemble de mesure de déformation (43₁, 43₂, 46, 46', 23, 23') lorsque le second élément d'actionnement (45c, 45c') est déplacé dans le second sens de mesure, et
- une seconde liaison élastique (45b, 45b') entre la seconde partie de fixation (45a, 55a) et le second élément d'actionnement (45c, 45c'), et
- un second ensemble d'actionnement (44) solidaire de celle des première et seconde parties (1a, 1b) du support (1) qui ne porte pas le second ensemble intermédiaire (45₁, 45₂, 55₁, 55₂), et possédant une seconde partie de poussée (44c, 44c') qui est dirigée dans le second sens de mesure, le second ensemble d'actionnement (44) étant configuré de telle sorte que :
- lorsque le second ensemble intermédiaire (45₁, 45₂, 55₁, 55₂) est porté par la première partie (1a) du support (1), la seconde partie de poussée (44c, 44c') est en regard du second ensemble intermédiaire (45₁, 45₂, 55₁, 55₂) de façon à exercer sur ce dernier une poussée dans le second sens de mesure lors d'un déplacement de la seconde partie (1b) du support (1) dans le second sens de mesure, déplaçant ainsi le second élément d'actionnement (45c, 45c') dans le second sens de mesure pour actionner le second ensemble de mesure de déformation (43₁, 43₂, 46, 46'), mais à n'exercer aucune action sur le second ensemble intermédiaire (45₁, 45₂, 55₁, 55₂) lors d'un déplacement de la seconde partie (1b) du support (1) dans le premier sens de mesure ; et
- lorsque le second ensemble intermédiaire est porté par la seconde partie (1b) du support (1), la seconde partie de poussée est en regard du second ensemble intermédiaire de façon à n'exercer aucune action sur le second ensemble intermédiaire lors d'un déplacement de la seconde partie (1b) du support (1) dans le second sens de mesure, le second élément d'actionnement étant ainsi déplacé conjointement avec la seconde partie (1b) du support (1) dans le second sens de mesure pour actionner le second ensemble de mesure de déformation (23, 23'), mais à exercer une poussée sur le second ensemble intermédiaire lors d'un déplacement de la seconde partie (1b) du support (1) dans le premier sens de mesure, afin d'empêcher tout déplacement relatif entre le second élément d'actionnement et le second ensemble de mesure de déformation (23, 23'),
ce par quoi le second ensemble de mesure de déformation (43₁, 43₂, 46, 46', 23, 23') ne sera actionné que lors d'un déplacement de la seconde partie (1b) du support (1) dans le second sens de mesure, permettant ainsi au capteur (C₃) de mesurer une déformation due à une sollicitation du capteur (C₃) en traction ou une déformation due à une sollicitation du capteur (C₃) en compression, tout en les discriminant l'une de l'autre.

## Patentansprüche

1. Passiver Sensor (C₁, C'₁, C₁₁, C₁₂, C₁₃; C₂, C'₂, C₂₁, C'₂₁, C₂₂, C₂₃; C₃) von Verformung (en), der eine Struktur gemäß einer Richtung (X), bezeichnet als Messrichtung, ausgesetzt ist, wobei der Sensor (C₁, C'₁, C₁₁, C₁₂, C₁₃; C₂, C'₂, C₂₁, C'₂₁, C₂₂, C₂₃; C₃) ein System zum Nachweis einer Variation der Distanz zwischen zwei Punkten oder Zonen einer Struktur umfasst, und einen Träger (1), der einen ersten Teil (1a) und einen zweiten Teil (1b) aufweist, die konfiguriert sind, um jeweils an den einen und an den anderen der zwei Punkte oder Zonen der Struktur befestigt zu sein, so dass, wenn sich einer des ersten und des zweiten Teils (1a, 1b) auf einem Weg entlang der Messrichtung (X) verschiebt, sich der andere des ersten und zweiten Teils (1a, 1b) auf dem entgegengesetzten Weg verschiebt, wobei das System zum Nachweis Folgendes umfasst:
- eine Einheit zum Messen der Verformung (3, 3'; 13, 13', 19, 19', 23, 33; 43, 46, 46'), die vom ersten Teil (1a) des Trägers (1) getragen wird und nur auf einem Weg, bezeichnet als Messweg, der Messrichtung (X) betätigt werden kann, um eines aus der Amplitude einer Verformung und der Anzahl von Verformungszyklen zu messen und zu speichern,
- eine Betätigungsvorrichtung (2, 2'; 12, 12', 22, 32; 42), umfassend ein Betätigungselement (5c, 5c', 5c1, 5c2, 5c3; 15c, 15c', 15d, 15d', 17d, 17d', 25d, 35d; 45c, 45c', 45d'), das gemäß der Messrichtung verschoben werden kann und konfiguriert ist, um die Einheit zum Messen der Verformung (3, 3'; 13, 13', 19, 19', 23, 33; 43, 46, 46') zu betätigen, wenn das Betätigungselement (5c, 5c', 5c1, 5c2, 5c3; 15c, 15c', 15d, 15d', 17d, 17d', 25d, 35d; 45c, 45c', 45d') in der Messrichtung nach einer relativen Verschiebung des ersten und zweiten Teils (1a, 1b) des Trägers (1) verschoben wird,
**dadurch gekennzeichnet, dass** die Betätigungsvorrichtung (2, 2'; 12, 12', 22, 32; 42) Folgendes umfasst:
- eine Zwischeneinheit (5, 5'; 15, 15', 17, 17', 25, 35; 45, 55), umfassend:
- einen Befestigungsteil (5a, 5a3; 15a, 17a, 25a; 45a, 55a), durch den die Zwischeneinheit (5, 5'; 15, 15', 17, 17', 25, 35; 45, 55) durch einen des ersten Teils und des zweiten Teils (1a, 1b) des Trägers (1) getragen wird,
- das Betätigungselement (5c, 5c', 5c1, 5c2, 5c3; 15c 15c', 15d, 15d', 17d, 17d', 25d, 35d; 45c, 45c'), und
- eine elastische Verbindung (5b, 5b', 5b3; 15b, 17b, 25b, 35b; 45b, 45b') zwischen dem Befestigungsteil (5a, 5a3; 15a, 17a, 25a; 45a, 55a) und dem Betätigungselement (5c, 5c', 5c1, 5c2, 5c3; 15c, 15c', 15d, 15d', 17d, 17d', 25d, 35d; 45c, 45c'), und
- eine Betätigungseinheit (4, 4'; 14, 14', 16, 16', 24, 34; 44), die fest mit derjenigen des ersten und zweiten Teils (1a, 1b) des Trägers (1) verbunden ist, der nicht die Zwischeneinheit (5, 5'; 15, 15', 17, 17', 25, 35; 45, 55) trägt, und aufweisend einen Teil, bezeichnet als Schiebeteil (4c, 4c', 4c1, 4c3; 14c, 14c', 16a, 16a', 24a, 34c, 35c; 44c, 44c'), der im Messweg ausgerichtet ist, wobei die Betätigungseinheit (4, 4'; 14, 14', 16, 16', 24, 34; 44) derart konfiguriert ist, dass:
- wenn die Zwischeneinheit (5, 5'; 15, 15', 17, 17', 35; 45, 55) vom ersten Teil (1a) des Trägers (1) getragen wird, sich der Schiebeteil (4c, 4c', 4c1, 4c3; 14c, 14c', 16a, 16a', 34c, 35c; 44c, 44c') gegenüber der Zwischeneinheit (5, 5'; 15, 15', 17, 17', 35; 45, 55) befindet, um auf diese Letztere einen Schub auf dem Messweg bei einer Verschiebung des zweiten Teils (1b) des Trägers (1) auf dem Messweg auszuüben, wodurch das Betätigungselement (5c, 5c', 5c1, 5c2, 5c3; 15c, 15c', 15d, 15d', 17d, 17d', 35d; 45c, 45c') auf dem Messweg verschoben wird, um die Einheit zum Messen der Verformung (3, 3'; 13, 13', 19, 19', 33; 43, 46, 46') zu betätigen, aber um keine Betätigung auf die Zwischeneinheit (5, 5'; 15, 15', 17, 17', 35; 45, 55) bei einer Verschiebung des zweiten Teils (1b) des Trägers (1) auf einem zweiten Weg auszuüben, der dem Messweg gegenüber liegt; und
- wenn die Zwischeneinheit (25) durch den zweiten Teil (1b) des Trägers (1) getragen wird, der Schiebeteil (24a) gegenüber der Zwischeneinheit (25) liegt, um keine Betätigung auf diese Letztere bei einer Verschiebung des zweiten Teils (1b) des Trägers (1) auf dem Messweg auszuüben, wobei das Betätigungselement (25d) so zusammen mit dem zweiten Teil (1b) des Trägers (1) auf dem Messweg verschoben wird, um die Einheit zum Messen der Verformung (23) zu betätigen, aber um einen Schub auf die Zwischeneinheit (25) bei einer Verschiebung des zweiten Teils (1b) des Trägers (1) auf dem Weg entgegen dem Messweg auszuüben, um jede relative Verschiebung zwischen dem Betätigungselement (25d) und der Einheit zum Messen der Verformung (23) zu verhindern,
wodurch die Einheit zum Messen der Verformung (3, 3'; 13, 13', 19, 19', 23, 33; 43, 46, 46') nur bei einer Verschiebung des zweiten Teils (1b) des Trägers (1) im Messweg betätigt wird, wodurch eine Messunterscheidung zwischen einer Zugbeanspruchung (C₁, C'₁, C₁₁, C₁₂, C₁₃; C₂, C'₂, C₂₁, C'₂₁, C₂₂, C₂₃; C₃) des Sensors und einer Kompressionsbeanspruchung (C₁, C'₁, C₁₁, C₁₂, C₁₃; C₂, C'₂, C₂₁, C'₂₁, C₂₂, C₂₃; C₃) des Sensors ermöglicht wird.

2. Sensor (C₁, C'₁, C₁₁, C₁₂, C₁₃; C₃) nach Anspruch 1, wobei die Zwischeneinheit (5, 5'; 45) vom ersten Teil (1a) des Trägers (1) getragen wird und wobei die Betätigungseinheit (4, 4'; 44) fest mit dem zweiten Teil (1b) des Trägers (1) verbunden ist, **dadurch gekennzeichnet, dass** die Einheit zum Messen der Verformung (3, 3'; 43) mindestens einen festen Zahn (3b, 3b', 3b1, 3b2, 3b3; 43b, 43b') umfasst und das Betätigungselement (5c, 5c', 5c1, 5c2, 5c3; 45c, 45c') mindestens einen Zahn (5e, 5e', 5e1, 5e2, 5e3; 45e, 45e'), bezeichnet als beweglicher Zahn, umfasst, wobei der oder jeder feste Zahn (3b, 3b', 3b1, 3b2, 3b3; 43b, 43b') eine Rückhalteseite (3e) bietet, die im Messweg ausgerichtet ist, und konfiguriert, um eine Verschiebung des oder der beweglichen Zahns/Zähne (5e, 5e', 5e1, 5e2, 5e3; 45e, 45e') über den festen Zahn (3b, 3b', 3b1, 3b2, 3b3; 43b, 43b') hinaus nach einer Verschiebung des zweiten Teils (1b) des Trägers (1) im Messweg zu erlauben, jedoch den oder einen der beweglichen Zahn/Zähne (5e, 5e', 5e1, 5e2, 5e3; 45e, 45e') zurückzuhalten, wenn sich das Betätigungselement (5c, 5c', 5c1, 5c2, 5c3; 45c, 45c') auf dem zweiten Weg unter der Einwirkung der elastischen Verbindung (5b, 5b', 5b3; 45b, 45b') verschiebt, nachdem es sich über den festen Zahn (3b, 3b', 3b1, 3b2, 3b3; 43b, 43b') hinaus verschoben hat.

3. Sensor (C₁₃) nach Anspruch 2, **dadurch gekennzeichnet, dass** die Einheit zum Messen der Verformung (3) mehrere feste Zähne (3b3) umfasst, die voneinander im Messweg und in einer Richtung orthogonal zum Messweg beabstandet sind, vorzugsweise angeordnet auf einer gleichen Ebene, und das Betätigungselement (5c3) mehrere bewegliche Zähne (5e3) umfasst, die ebenfalls voneinander derart beabstandet sind, dass jeder bewegliche Zahn (5e3) auf der Achse eines entsprechenden festen Zahns (3b3) anordnet ist, wobei die beweglichen Zähne (5e3) und/oder die festen Zähne (3b3) voneinander um einen Schritt unter der Länge der beweglichen (5e3) und/oder festen Zähne (3b3) beabstandet sind.

4. Sensor (C₁, C'₁, C₁₁, C₁₂, C₁₃; C₃) nach einem der Ansprüche 2 und 3, **dadurch gekennzeichnet, dass** das Betätigungselement (5c, 5c', 5c1, 5c2, 5c3; 45c, 45c') aus mindestens einem Balken, bezeichnet als Betätigungsbalken, gebildet ist, wobei der mindestens eine Betätigungsbalken (5c, 5c', 5c1, 5c2, 5c3; 45c, 45c') einen oder mehrere beweglichen Zahn/Zähne (5e, 5e', 5e1, 5e2, 5e3; 45e, 45e') umfasst und die elastische Verbindung (5b, 5b', 5b3; 45b, 45b') mindestens zwei parallele Verbindungsbalken umfasst, die jeweils ein erstes Ende aufweisen, das fest mit dem Befestigungsteil (5a, 5a3; 45a) verbunden ist, und ein zweites Ende, das fest mit mindestens einem Betätigungsbalken (5c, 5c', 5c1, 5c2, 5c3; 45c, 45c') verbunden ist, wobei die mindestens zwei Verbindungsbalken (5b, 5b', 5b3; 45b, 45b') ein verformbares Parallelogramm bilden.

5. Sensor (C₂, C'₂, C₂₁, C'₂₁, C₂₂, C₂₃; C₃) nach Anspruch 1, **dadurch gekennzeichnet, dass** die Einheit zum Messen der Verformung (13, 13', 19, 19', 23, 33; 43, 46, 46') ein Zahnrad (13a, 13a', 19a, 19a', 23a, 33a) ist, das drehend auf dem ersten Teil (1a) des Trägers (1) montiert ist und das Betätigungselement (15c, 15c', 15d, 15d', 17d, 17d', 25d, 35d) aus einem Balken, bezeichnet als Betätigungsbalken, gebildet ist, umfassend in einer Endregion mindestens einen Zahn (15e, 15e', 17e, 17e', 25e, 35e), der sich zwischen zwei Zähnen (13d, 13d', 19b, 23b, 33b) des Zahnrads (13a, 13a', 19a, 19a', 23a, 33a) erstreckt, um ein Getriebe mit den Zähnen (13d, 13d', 19b, 23b, 33b) des Zahnrads (13a, 13a', 19a, 19a', 23a, 33a) zu bilden.

6. Sensor (C₂, C'₂, C₂₃; C₃) nach Anspruch 5, wobei die Zwischeneinheit (15, 15', 35; 55) und die Betätigungseinheit (14, 14', 34; 44) vom ersten (1a) bzw. zweiten Teil (1b) des Trägers (1) getragen werden, **dadurch gekennzeichnet, dass** sich die Betätigungseinheit (14, 14', 34; 44) überhängend über den ersten Teil (1a) des Trägers (1) erstreckt, wobei die Endregion der Betätigungseinheit (14, 14', 34; 44), die überhängend angeordnet ist, den Schiebeteil (14c, 14c', 34c; 44c, 44c') aufweist, wobei der Schiebeteil (14c, 14c', 34c; 44c, 44c') mit der Zwischeneinheit (15, 15', 35; 55) in Kontakt steht oder beabstandet ist.

7. Sensor (C₂₁, C'₂₁) nach Anspruch 5, wobei die Zwischeneinheit (17, 17') und die Betätigungseinheit (16, 16') vom ersten (1a) bzw. zweiten Teil (1b) des Trägers (1) getragen werden, **dadurch gekennzeichnet, dass** die Zwischeneinheit (17, 17'), in dem sie sich vom Ende der elastischen Verbindung (17b) gegenüber dem Befestigungsteil (17a) der Zwischeneinheit (17, 17') erstreckt, einen Auflageteil (17c, 17c') umfasst, der überhängend über den zweiten Teil (1b) des Trägers (1) ist, und gegen den der Schiebeteil (16a, 16a') einen Schub für den Fall einer Verschiebung des zweiten Teils (1b) des Trägers (1) auf dem Messweg ausübt.

8. Sensor (C₂₂; C₃) nach Anspruch 5, wobei die Zwischeneinheit (25) und die Betätigungseinheit (24) durch den zweiten Teil (1b) bzw. den ersten Teil (1a) des Trägers (1) getragen werden, **dadurch gekennzeichnet, dass** die Zwischeneinheit (25), indem sie sich vom Ende der elastischen Verbindung (25b) gegenüber dem Befestigungsteil (25a) der Zwischeneinheit (25) erstreckt, einen Auflageteil (25c) umfasst, der überhängend über den ersten Teil (1a) des Trägers (1) ist, und gegen den der Schiebeteil (24a) einen Schub für den Fall einer Verschiebung des zweiten Teils (1b) des Trägers (1) auf dem Weg gegenüber dem Messweg ausübt, wobei der Schiebeteil (24a) vorzugsweise derart positioniert ist, dass er den Betätigungsbalken (25d) gegen die Rückstellwirkung der elastischen Verbindung (25b) in einer versetzten Position im Messweg hält, derjenigen, die der Betätigungsbalken (25d) bei Abwesenheit des Schiebeteils (24a) einnehmen würde.

9. Sensor (C₂₁, C'₂₁, C₂₂; C₃) nach einem der Ansprüche 7 und 8, **dadurch gekennzeichnet, dass** die Betätigungseinheit (16, 16', 24) einen Teil in Form einer Scheibe (16a, 16a', 24a) umfasst, deren äußerer Rand den Schiebeteil darstellt, wobei der Teil in Form einer Scheibe (16a, 16a', 24a) in Drehung um eine exzentrische Drehachse gegenüber dem Zentrum des Teils in Form einer Scheibe (16a, 16a', 24a) derart angeordnet ist, dass eine Drehung des Teils in Form einer Scheibe (16a, 16a', 24a) ermöglicht, entweder den Abstand zwischen dem Schiebeteil (16a, 16a') und dem Auflageteil (17c, 17c') der Zwischeneinheit (17, 17', 25) oder den Abstand zwischen der versetzten Position, in der der Betätigungsbalken (25d) gehalten wird, und derjenigen, die sie bei Abwesenheit der Betätigungseinheit (24) einnehmen würde, variieren zu lassen.

10. Sensor (C₂₃) nach Anspruch 6, **dadurch gekennzeichnet, dass** das Betätigungselement (35) durch ein Zwischenstück gebildet ist, das einerseits mindestens einen Zahn (35e) umfasst, der sich zwischen zwei Zähnen (33b) des Zahnrads (33a) erstreckt, um ein Getriebe mit den Zähnen (33b) des Zahnrads (33) zu bilden, und andererseits eine Aussparung, in der sich der Schiebeteil (34c) der Betätigungseinheit (34) erstreckt, wobei die Aussparung eine Auflageseite (35g) aufweist, die dem Schiebeteil (34c) gegenüber liegt, und vorzugsweise auch beabstandet vom Schiebeteil (34c).

11. Sensor (C₂, C'₂, C₂₁, C'₂₁, C₂₂, C₂₃ C₃) nach einem der Ansprüche 6 bis 9, **dadurch gekennzeichnet, dass** die elastische Verbindung (15b, 17b, 25b; 45b, 45b') der Zwischeneinheit (15, 15', 17, 17', 25; 55) mindestens zwei parallele Verbindungsbalken umfasst, die orthogonal zur Messrichtung sind, die jeweils ein erstes Ende aufweisen, das fest mit dem Befestigungsteil (15a, 17a, 25a; 55a) verbunden ist, und ein zweites Ende, das fest mit dem Betätigungsbalken (15c, 15c', 15d, 15d', 17d, 17d', 25d) verbunden ist, wobei die mindestens zwei Verbindungsbalken (15b, 17b, 25b; 45b, 45b') ein verformbares Parallelogramm bilden.

12. Sensor (C₃) nach einem der Ansprüche 1 bis 11, **dadurch gekennzeichnet, dass** er eine zweite Einheit zum Messen der Verformung (43₁, 43₂, 46, 46', 23, 23') umfasst, die vom ersten Teil (1a) des Trägers (1) getragen wird und nur auf einem zweiten Messweg, gegenüber dem ersten Messweg, betätigt werden kann, um eines aus der Amplitude einer Verformung und der Anzahl von Verformungszyklen zu messen und zu speichern, und dadurch, dass die Betätigungsvorrichtung (42, 44, 22, 22') Folgendes umfasst:
- eine zweite Zwischeneinheit (45₁, 45₂, 55₁, 55₂) umfassend:
- einen zweiten Befestigungsteil (45a, 55a), durch den die zweite Zwischeneinheit (45₁, 45₂, 55₁, 55₂) durch einen des ersten Teils und des zweiten Teils (1a, 1b) des Trägers (1) getragen wird,
- ein zweites Betätigungselement (45c, 45c'), das gemäß der zweiten Messrichtung verschoben werden kann und konfiguriert ist, um die zweite Einheit zum Messen der Verformung (43₁, 43₂, 46, 46', 23, 23') zu betätigen, wenn das zweite Betätigungselement (45c, 45c') auf dem zweiten Messweg verschoben wird, und
- eine zweite elastische Verbindung (45b, 45b') zwischen dem zweiten Befestigungsteil (45a, 55a) und dem zweiten Betätigungselement (45c, 45c'), und
- eine zweite Betätigungseinheit (44), die fest mit derjenigen des ersten und zweiten Teils (1a, 1b) des Trägers (1) verbunden ist, die nicht die zweite Zwischeneinheit (45₁, 45₂, 55₁, 55₂) trägt, und aufweisend einen zweiten Schiebeteil (44c, 44c'), der im zweiten Messweg ausgerichtet ist, wobei die zweite Betätigungseinheit (44) derart konfiguriert ist, dass:
- wenn die zweite Zwischeneinheit (45₁, 45₂, 55₁, 55₂) vom ersten Teil (1a) des Trägers (1) getragen wird, der zweite Schiebeteil (44c, 44c') gegenüber der zweiten Zwischeneinheit (45₁, 45₂, 55₁, 55₂) ist, um auf diese letztere einen Schub auf dem zweiten Messweg bei einer Verschiebung des zweiten Teils (1b) des Trägers (1) auf dem zweiten Messweg auszuüben, wodurch somit das zweite Betätigungselement (45c, 45c') auf dem zweiten Messweg verschoben wird, um die zweite Einheit zum Messen der Verformung (43₁, 43₂, 46, 46') zu betätigen, aber um keine Betätigung auf die zweite Zwischeneinheit (45₁, 45₂, 55₁, 55₂) bei einer Verschiebung des zweiten Teils (1b) des Trägers (1) auf dem Messweg auszuüben; und
- wenn die zweite Zwischeneinheit durch den zweiten Teil (1b) des Trägers (1) getragen wird, der zweite Schiebeteil gegenüber der zweiten Zwischeneinheit ist, um keine Betätigung auf die zweite Zwischeneinheit bei einer Verschiebung des zweiten Teils (1b) des Trägers (1) auf dem Messweg auszuüben, wobei das zweite Betätigungselement somit zusammen mit dem zweiten Teil (1b) des Trägers (1) im zweiten Messweg verschoben wird, um die zweite Einheit zum Messen der Verformung (23, 23') zu betätigen, aber um einen Schub auf die zweite Zwischeneinheit bei einer Verschiebung des zweiten Teils (1b) des Trägers (1) auf dem ersten Messweg auszuüben, um jede relative Verschiebung zwischen dem zweiten Betätigungselement und der zweiten Einheit zum Messen der Verformung (23, 23') zu verhindern,
wodurch die zweite Einheit zum Messen der Verformung (43₁, 43₂, 46, 46', 23, 23') nur bei einer Verschiebung des zweiten Teils (1b) des Trägers (1) auf dem zweiten Messweg betätigt wird, wodurch dem Sensor (C₃) ermöglicht wird, eine Verformung aufgrund einer Zugbeanspruchung des Sensors (C₃) oder einer Verformung aufgrund einer Kompressionsbeanspruchung des Sensors (C₃) bei einer gleichzeitigen Unterscheidung voneinander zu messen.

## Claims

1. A passive sensor (C₁, C'₁, C₁₁, C₁₂, C₁₃; C₂, C'₂, C₂₁, C₂₁, C₂₂, C₂₃; C₃) for deformation (s) to which a structure is subjected along a so-called measurement orientation (X), the sensor (C₁, C'₁, C₁₁, C₁₂, C₁₃; C₂, C'₂, C₂₁, C'₂₁, C₂₂, C₂₃; C₃) comprising a detection system for detecting a variation in a distance between two points or regions of a structure, and a carrier (1) having a first part (1a) and a second part (1b) configured to be fixed respectively to one of said two points or regions of the structure such that, when one of the first and second parts (1a, 1b) moves in a direction along the measurement orientation (X), the other of the first and second parts (1a, 1b) moves in the opposite direction, the detection system comprising:
- a deformation measuring assembly (3, 3'; 13, 13', 19, 19', 23, 33; 43, 46, 46') carried by the first part (1a) of the carrier (1) and actuatable only in one direction, so-called measurement direction, of the measurement orientation (X), in order to measure and store one among the amplitude of the deformation and the number of deformation cycles,
- an actuating device (2, 2'; 12, 12', 22, 32; 42) comprising an actuating member (5c, 5c', 5c1, 5c2, 5c3; 15c, 15c', 15d, 15d', 17d, 17d', 25d, 35d; 45c, 45c', 45d') which is movable along the measurement orientation and is configured to actuate the deformation measuring assembly (3, 3'; 13, 13', 19, 19', 23, 33; 43, 46, 46') when the actuating member (5c, 5c', 5c1, 5c2, 5c3; 15c, 15c', 15d, 15d', 17d, 17d', 25d, 35d; 45c, 45c', 45d') is moved in the measurement orientation, as a result of a relative movement between the first and second parts (1a, 1b) of the carrier (1),
**characterised in that** the actuating device (2, 2'; 12, 12', 22, 32; 42) comprises:
- an intermediary assembly (5, 5'; 15, 15', 17, 17', 25, 35; 45, 55) comprising:
- a fixing part (5a, 5a3; 15a, 17a, 25a; 45a, 55a) using which the intermediary assembly (5, 5'; 15, 15', 17, 17', 25, 35; 45, 55) is carried by one of the first and second parts (1a, 1b) of the carrier (1),
- the actuating member (5c, 5c', 5c1, 5c2, 5c3; 15c, 15c', 15d, 15d', 17d, 17d', 25d, 35d; 45c, 45c'), and
- an elastic connection (5b, 5b', 5b3; 15b, 17b, 25b, 35b; 45b, 45b') between the fixing part (5a, 5a3; 15a, 17a, 25a; 45a, 55a) and the actuating member (5c, 5c', 5c1, 5c2, 5c3; 15c, 15c', 15d, 15d', 17d, 17d', 25d, 35d; 45c, 45c'), and
- an actuating assembly (4, 4'; 14, 14', 16, 16', 24, 34; 44) which is integral with the one among the first and second parts (1a, 1b) of the carrier (1) that does not carry the intermediary assembly (5, 5'; 15, 15', 17, 17', 25, 35; 45, 55), and which has a so-called push part (4c, 4c', 4c1, 4c3; 14c, 14c', 16a, 16a', 24a, 34c, 35c; 44c, 44c') which is directed in the measurement direction, the actuating assembly (4, 4'; 14, 14', 16, 16', 24, 34; 44) being configured such that:
- in case the intermediary assembly (5, 5'; 15, 15', 17, 17', 25, 35; 45, 55) is carried by the first part (1a) of the carrier (1), the push part (4c, 4c', 4c1, 4c3; 14c, 14c', 16a, 16a', 24a, 34c, 35c; 44c, 44c') faces the intermediary assembly (5, 5'; 15, 15', 17, 17', 25, 35; 45, 55) so as to apply thereon a push in the measurement direction when the second part (1b) of the carrier (1) moves in the measurement direction, thereby moving the actuating member (5c, 5c', 5c1, 5c2, 5c3; 15c, 15c', 15d, 15d', 17d, 17d', 35d; 45c, 45c') in the measurement direction in order to actuate the deformation measuring assembly (3, 3'; 13, 13', 19, 19', 33; 43, 46, 46'), but so as not to exert any action on the intermediary assembly (5, 5'; 15, 15', 17, 17', 35; 45, 55) when the second part (1b) of the carrier (1) moves in a second direction opposite the measurement direction; and
- in case the intermediary assembly (25) is carried by the second part (1b) of the carrier (1), the push part (24a) faces the intermediary assembly (25) so as not to exert any action thereon when the second part (1b) of the carrier (1) moves in the measurement direction, the actuating member (25d) thus being moved together with the second part (1b) of the carrier (1) in the measurement direction in order to actuate the deformation measuring assembly (23), but so as to apply a push on the intermediary assembly (25) when the second part (1b) of the carrier (1) moves in the direction opposite the measurement direction, in order to prevent any relative movement between the actuating member (25d) and the deformation measuring assembly (23),
whereby the deformation measuring assembly (3, 3'; 13, 13', 19, 19', 23, 33; 43, 46, 46') will be actuated only when the second part (1b) of the carrier (1) moves in the measurement direction, thereby allowing a measurement discrimination between the sensor (C₁, C'₁, C₁₁, C₁₂, C₁₃; C₂, C'₂, C₂₁, C'₂₁, C₂₂, C₂₃; C₃) being subjected to a tension load and the sensor (C₁, C'₁, C₁₁, C₁₂, C₁₃; C₂, C'₂, C₂₁, C'₂₁, C₂₂, C₂₃; C₃) being subjected to a compression load.

2. The sensor (C₁, C'₁, C₁₁, C₁₂, C₁₃; C₃) according to claim 1, wherein the intermediary assembly (5, 5'; 45) is carried by the first part (1a) of the carrier (1) and the actuating assembly (4, 4'; 44) is integral with the second part (1b) of the carrier (1), **characterised in that** the deformation measuring assembly (3, 3'; 43) comprises at least one fixed tooth (3b, 3b', 3b1, 3b2, 3b3; 43b, 43b') and the actuating member (5c, 5c', 5c1, 5c2, 5c3; 45c, 45c') comprises at least one so-called movable tooth (5e, 5e', 5e1, 5e2, 5e3; 45e, 45e'), the or each fixed tooth (3b, 3b', 3b1, 3b2, 3b3; 43b, 43b') providing a retaining face (3e) directed in the measurement direction and configured to enable a movement of the one or several movable teeth (5e, 5e', 5e1, 5e2, 5e3; 45e, 45e') beyond said fixed tooth (3b, 3b', 3b1, 3b2, 3b3; 43b, 43b') as a result of a movement of the second part (1b) of the carrier (1) in the measurement direction, but to retain the or one of the movable teeth (5e, 5e', 5e1, 5e2, 5e3; 45e, 45e') when the actuating member (5c, 5c', 5c1, 5c2, 5c3; 45c, 45c') moves in the second direction under the action of the elastic connection (5b, 5b', 5b3; 45b, 45b'), after having moved beyond said fixed tooth (3b, 3b', 3b1, 3b2, 3b3 ; 43b, 43b').

3. The sensor (C₁₃) according to claim 2, **characterised in that** the deformation measuring assembly (3) comprises several fixed teeth (3b3), spaced from each other in the measurement direction and in an orientation orthogonal to the measurement direction, preferably located in a same plane, and the actuating member (5c3) comprises several movable teeth (5e3) also spaced from each other such that each movable tooth (5e3) is located on the axis of a corresponding fixed tooth (3b3), the movable teeth (5e3) and/or the fixed teeth (3b3) being spaced from each other by a pitch smaller than the length of the movable teeth (5e3) and/or the fixed teeth (3b3).

4. The sensor (C₁, C'₁, C₁₁, C₁₂, C₁₃; C₃) according to one of claims 2 and 3, **characterised in that** the actuating member (5c, 5c', 5c1, 5c2, 5c3; 45c, 45c') is formed by at least one so-called actuating beam, the at least one actuating beam (5c, 5c', 5c1, 5c2, 5c3; 45c, 45c') comprising one or several movable teeth (5e, 5e', 5e1, 5e2, 5e3; 45e, 45e'), and the elastic connection (5b, 5b', 5b3; 45b, 45b') comprises at least two parallel connecting beams each having a first end integral with the fixing part (5a, 5a3; 45a) and a second end integral with the at least one actuating beam (5c, 5c', 5c1, 5c2, 5c3; 45c, 45c'), the at least two connecting beams (5b, 5b', 5b3; 45b, 45b') forming a deformable parallelogram.

5. The sensor (C₂, C'₂, C₂₁, C'₂₁, C₂₂, C₂₃; C₃) according to claim 1, **characterised in that** the deformation measuring assembly (13, 13', 19, 19', 23, 33; 43, 46, 46') is a toothed wheel (13a, 13a', 19a, 19a', 23a, 33a) rotatably mounted on the first part (1a) of the carrier (1) and the actuating member (15c, 15c', 15d, 15d', 17d, 17d', 25d, 35d) is formed by a so-called actuating beam comprising, in an end region, at least one tooth (15e, 15e', 17e, 17e', 25e, 35e) extending between two teeth (13d, 13d', 19b, 23b, 33b) of the toothed wheel (13a, 13a', 19a, 19a', 23a, 33a) so as to constitute a gear with the teeth (13d, 13d', 19b, 23b, 33b) of the toothed wheel (13a, 13a', 19a, 19a', 23a, 33a).

6. The sensor (C₂, C'₂, C₂₃; C₃) according to claim 5, wherein the intermediary assembly (15, 15', 35; 55) and the actuating assembly (14, 14', 34; 44) are carried by the first (1a) and second (1b) parts of the carrier (1), respectively, **characterised in that** the actuating assembly (14, 14', 34; 44) extends in a cantilever manner above the first part (1a) of the carrier (1), the end region of the actuating assembly (14, 14', 34; 44) that is cantilevered having the push part (14c, 14c', 34c; 44c, 44c'), the push part (14c, 14c', 34c; 44c, 44c') being in contact with the intermediary assembly (15, 15', 35 ; 55) or spaced therefrom.

7. The sensor (C₂₁, C'₂₁) according to claim 5, wherein the intermediary assembly (17, 17') and the actuating assembly (16, 16') are carried by the first (1a) and second (1b) parts of the carrier (1), respectively, **characterised in that** the intermediary assembly (17, 17') comprises, extending from the end of the elastic connection (17b) opposite the fixing part (17a) of the intermediary assembly (17, 17'), a pressing part (17c, 17c') which is cantilevered above the second part (1b) of the carrier (1) and against which the push part (16a, 16a') will apply a push in case the second part (1b) of the carrier (1) moves in the measurement direction.

8. The sensor (C₂₂ ; C₃) according to claim 5, wherein the intermediary assembly (25) and the actuating assembly (24) are carried by the second (1b) and first (1a) parts of the carrier (1), respectively, **characterised in that** the intermediary assembly (25) comprises, extending from the end of the elastic connection (25b) opposite the fixing part (25a) of the intermediary assembly (25), a pressing part (25c) which is cantilevered above the first part (1a) of the carrier (1) and against which the push part (24a) will apply a push in case the second part (1b) of the carrier (1) moves in the direction opposite the measurement direction, the push part (24a) being preferably positioned so as to hold the actuating beam (25d), against the return action of the elastic connection (25d), in a position offset, in the measurement direction, from the position the actuating beam (25d) would occupy in the absence of the push part (24a).

9. The sensor (C₂₁, C'₂₁, C₂₂; C₃) according to one of claims 7 and 8, **characterised in that** the actuating assembly (16, 16', 24) comprises a disk-shaped part (16a, 16a', 24a) the outer edge of which constitutes the push part, the disk-shaped part (16a, 16a', 24a) being mounted so as to be rotatable around a rotation axis which is offset with respect to the center of the disk-shaped part (16a, 16a', 24a), such that a rotation of the disk-shaped part (16a, 16a', 24a) enables to vary either the distance between the push part (16a, 16a') and the pressing part (17c, 17c') of the intermediary assembly (17, 17', 25) or the distance between the offset position, in which the actuating beam (25d) is held, and the position it would occupy in the absence of the actuating assembly (24).

10. The sensor (C₂₃) according to claim 6, **characterised in that** the actuating member (35) is formed by an intermediary piece comprising, on one hand, at least one tooth (35e) extending between two teeth (33b) of the toothed wheel (33a) so as to constitute a gear with the teeth (33b) of the toothed wheel (33) and, on the other hand, a recess in which the push part (34c) of the actuating assembly (34) extends, the recess having a pressing face (35g) opposite the push part (34c) and preferably spaced from the push part (34c).

11. The sensor (C₂, C'₂, C₂₁, C'₂₁, C₂₂, C₂₃ ; C₃) according to one of claims 6 to 9, **characterised in that** the elastic connection (15b, 17b, 25b; 45b, 45b') of the intermediary assembly (15, 15', 17, 17', 25; 55) comprises at least two parallel connecting beams, orthogonal to the measurement direction and each having a first end integral with the fixing part (15a, 17a, 25a; 55a) and a second end integral with the actuating beam (15c, 15c', 15d, 15d', 17d, 17d', 25d), the at least two connecting beams (15b, 17b, 25b; 45b, 45b') forming a deformable parallelogram.

12. The sensor (C₃) according to one of claims 1 to 11, **characterised in that** it comprises a second deformation measuring assembly (43₁, 43₂, 46, 46', 23, 23') carried by the first part (1a) of the carrier (1) and actuatable only in a second measurement direction, opposite the first measurement direction, in order to measure and store one among the amplitude of a deformation and the number of deformation cycles, and **in that** the actuating device (42, 44, 22, 22') comprises:
- a second intermediary assembly (45₁, 45₂, 55₁, 55₂) comprising :
- a second fixing part (45a, 55a) using which the second intermediary assembly (45₁, 45₂, 55₁, 55₂) is carried by one of the first and second parts (1a, 1b) of the carrier (1),
- a second actuating member (45c, 45c') movable along the measurement orientation and configured to actuate the second deformation measuring assembly (43₁, 43₂, 46, 46', 23, 23') when the second actuating member (45c, 45c') is moved in the second measurement direction, and
- a second elastic connection (45b, 45b') between the second fixing part (45a, 55a) and the second actuating member (45c, 45c'), and
- a second actuating assembly (44) integral with the one among the first and second parts (1a, 1b) of the carrier (1) that does not carry the second intermediary assembly (45₁, 45₂, 55₁, 55₂), and having a second push part (44c, 44c') which is directed in the second measurement direction, the second actuating assembly (44) being configured such that:
- in case the second intermediary assembly (45₁, 45₂, 55₁, 55₂) is carried by the first part (1a) of the carrier (1), the second push part (44c, 44c') faces the second intermediary assembly (45₁, 45₂, 55₁, 55₂) so as to apply thereon a push in the second measurement direction when the second part (1b) of the carrier (1) moves in the second measurement direction, thereby moving the second actuating member (45c, 45c') in the second measurement direction in order to actuate the second deformation measuring assembly (43₁, 43₂, 46, 46'), but so as not to apply any action on the second intermediary assembly (45₁, 45₂, 55₁, 55₂) when the second part (1b) of the carrier (1) moves in the first measurement direction; and
- in case the second intermediary assembly is carried by the second part (1b) of the carrier (1), the second push part faces the second intermediary assembly so as not to exert any action on the second intermediary assembly when the second part (1b) of the carrier (1) moves in the second measurement direction, the second actuating member thus being moved together with the second part (1b) of the carrier (1) in the second measurement direction in order to actuate the second deformation measuring assembly (23, 23'), but so as to apply a push on the second intermediary assembly when the second part (1b) of the carrier (1) moves in the first measurement direction, in order to prevent any relative movement between the second actuating member and the second deformation measuring assembly (23, 23'),
whereby the second deformation measuring assembly (43₁, 43₂, 46, 46', 23, 23') will be actuated only when the second part (1b) of the carrier (1) moves in the second measurement direction, thereby enabling the sensor (C₃) to measure a deformation due to a tension load on the sensor (C₃) or a deformation due to a compression load on the sensor (C₃), while discriminating them from each other.
